# EUROPÄISCHE PATENTSCHRIFT

(11) **EP 3 207 341 B1**
(45) Veröffentlichungstag und Bekanntmachung des Hinweises auf die Patenterteilung: **17.06.2020**
(21) Anmeldenummer: 15759738.6
(22) Anmeldetag: 02.09.2015
(51) Int. Cl.: G01F 1/84, G01F 15/00, G01F 15/18

(54) **MESSSYSTEM ZUM MESSEN WENIGSTENS EINER MESSGRÖSSE EINES FLUIDS SOWIE VERFAHREN ZUM BETREIBEN EINES SOLCHEN MESSSYSTEMS**
MEASUREMENT SYSTEM FOR MEASURING AT LEAST ONE QUANTITY OF A FLUID AND PROCESS FOR OPERATING SUCH A MEASUREMENT SYSTEM
SYSTÈME DE MESURE POUR MESURER AU MOINS UNE QUANTITÉ D'UN FLUIDE ET PROCÉDÉ DE FONCTIONNEMENT D'UN TEL SYSTÈME DE MESURE

(30) Priorität: 17.10.2014 DE 102014015319; 05.03.2015 DE 102015103208
(43) Veröffentlichungstag der Anmeldung: 23.08.2017
(73) Patentinhaber: Endress+Hauser Flowtec AG, 4153 Reinach (CH)
(72) Erfinder: BERNHARD, Holger, 79639 Grenzach-Wyhlen (DE); LAMBRIGGER, Michael, 4056 Basel (CH); GSCHWEND, Gebhard, 4123 Allschwil (CH); MATT, Christian, 4153 Reinach (CH)
(74) Vertreter: Andres, Angelika Maria
(86) Internationale Anmeldenummer: PCT/EP2015/070020
(87) Internationale Veröffentlichungsnummer: WO 2016/058745

(56) Entgegenhaltungen:
- WO-A1-2008/024112
- WO-A1-2008/064459
- GB-A- 2 171 200
- US-A1- 2002 100 505
- US-A1- 2014 262 131

## Beschreibung

Die Erfindung betrifft u.a. ein, beispielsweise als Bestandteil einer Übergabestelle für eichpflichtigen Güterverkehr ausgestaltetes, Meßsystem zum Messen wenigstens einer Meßgröße - beispielsweise einer Massendurchflußrate, eines Massendurchflusses, einer Volumendurchflußrate, eines Volumendurchflusses, einer Dichte, einer Viskosität oder einer Temperatur - eines strömenden Fluids - etwa eines Gases, einer Flüssigkeit oder einer Dispersion. Zudem bezieht sich die Erfindung auch darauf, nämliches Meßsystem zum Ermitteln von Meßwerten für wenigstens eine Meßgröße - insb. nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, beispielsweise nämlich eines Methan und/oder Ethan und/oder Propan und/oder Buthan enthaltenden Flüssiggases und/oder eines verflüssigten Erdgases (LNG), zu verwenden. Desweiteren bezieht sich die Erfindung auf ein Verfahren zum Betreiben - beispielsweise nämlich zum Temperieren und/oder zum Reinigen - eines dem Messen wenigstens einer Meßgröße eines strömenden Fluids - insb. eines Gases, einer Flüssigkeit oder einer Dispersion - dienenden Meßsystems.

Aus der WO-A 02/060805 ist ein Meßsystem zum Messen wenigstens einer Meßgröße - hier einer Massendurchflußrate, eines Massendurchflusses, einer Volumendurchflußrate bzw. eines Volumendurchflusses - eines strömenden Fluids, beispielsweise einer Flüssigkeit oder einem Gas, bekannt. Nämliches Meßsystem dient im besonderen als Übergabestelle für ein Fluidprodukt, beispielsweise einem Erdöl, einem flüssigem Kraftstoff, einem Flüssiggas oder dergleichen, und ist mittels einer an ein Fluid vorhaltendes Vorratsbehälter, beispielsweise einen Tank, angeschlossenen Fluid-Zuführleitung, mittels einer an nämliches Vorratsbehälter angeschlossenen Fluid-Rückführleitung, mittels einer an die Fluid-Rückführleitung angeschlossenen Stellvorrichtung zum Einrichten bzw. Unterbrechen von verschiedenen Strömungspfaden des Meßsystems, mittels einer Wandlervorrichtung zum Generieren wenigstens eines mit der wenigstens einen Meßgröße korrespondierendes, nämlich wenigsten einen von der Meßgröße abhängigen Signalparameter aufweisendes bzw. auf eine Änderung der Meßgröße mit einer Änderung nämlichen Signalparameters reagierendes elektrischen Meßsignals, sowie mittels einer Fluid-Entnahmeleitung gebildet.

Die - hier als ein Bestandteil eines dem Generieren zweier jeweils einen von der Massendurchflußrate abhängigen Phasenwinkel bzw. jeweils eine von der Dichte des des Fluids abhängige Signalfrequenz aufweisender Meßsignale dienenden vibronischen Meßwandlers ausgestaltete - Wandlervorrichtung umfaßt ein erstes Rohr und ein zweites Rohr. Die beiden Rohre sind strömungstechnisch über eine einlaßseitige Leitungsverzweigung sowie eine auslaßseitige Leitungsvereinigung dauerhaft parallel geschaltet und hier zudem dafür eingerichtet, im Betrieb des Meßsystems gleichzeitig von Fluid durchströmt und währenddessen zwecks Generieren der Meßsignale vibrieren gelassen zu werden.

Die - hier mittels eines Rückschlagventils sowie eines zwei Schaltstellungen aufweisenden Rücklaufventils gebildete - Stellvorrichtung ist dafür vorgesehen, wahlweise einen vom Lumen der Fluid-Zuführleitung zum Lumen des ersten Rohrs der Wandlervorrichtung und parallel zum Lumen des zweiten Rohrs der Wandlervorrichtung und weiter vom Lumen des ersten Rohrs bzw. vom Lumen des zweiten Rohrs jeweils zum Lumen der Fluid- Rückführleitung, gleichwohl nicht zum Lumen der Fluid-Entnahmeleitung führenden ersten Strömungspfad einzurichten, derart, daß von entlang des ersten Strömungspfads strömen gelassenem Fluid ein Teilvolumen durch das Lumen des ersten Rohrs weiter zum Lumen der Fluid-Entnahmeleitung und zeitgleich ein anderes Teilvolumen durch das Lumen des zweiten Rohrs weiter zum Lumen der Fluid-Rückführleitung strömen, oder wahlweise einen vom Lumen der Fluid-Zuführleitung zum Lumen des ersten Rohrs der Wandlervorrichtung und parallel zum Lumen des zweiten Rohrs der Wandlervorrichtung und weiter vom Lumen des ersten Rohrs bzw. vom Lumen des zweiten Rohrs jeweils zum Lumen der Fluid-Entnahmeleitung, gleichwohl nicht zum Lumen der Fluid-Rückführleitung führenden zweiten Strömungspfad einzurichten, derart, daß von entlang des zweiten Strömungspfads strömengelassenem Fluid ein Teilvolumen durch das Lumen des ersten Rohrs weiter zum Lumen der Fluid-Entnahmeleitung und zeitgleich ein anderes Teilvolumen durch das Lumen des zweiten Rohrs weiter zum Lumen der Fluid-Entnahmeleitung strömen. Der erste Strömungspfad beginnt und endet jeweils im Vorratsbehälter und dient hier insbesondere als Kreilaufsystem zum Vermeiden von Fremdstoffe innerhalb eines schlußendlich via zweiten Strömungspfad in einen entsprechenden Entnahmebehälter, beispielsweise einen Tank eines Tankwagens, abzufüllenden Teilvolumen des Fluids. Zum Fördern von Fluid entlang des ersten Strömungspfads bzw. entlang des zweiten Strömungspfads weist das Meßsystem ferner eine entsprechende Förderpumpe auf. Zudem umfaßt das Meßsystem eine mit der Wandlervorrichtung elektrisch gekoppelte Meß- und Betriebselektronik, die dafür eingerichtet ist, das wenigstens eine Meßsignal zu verarbeiten, nämlich mittels des wenigstens einen Meßsignals die Meßwerte für die wenigstens eine Meßgröße zu ermitteln, sowie eine mit der Stellvorrichtung elektrisch gekoppelte Steuerelektronik, die dafür eingerichtet ist, die Stellvorrichtung ansteuernde, beispielsweise nämlich das Einstellen des ersten Strömungspfades bzw. des zweiten Strömungspfades bewirkende Steuerbefehle tragende, Steuersignale zu liefern. Die Meß- und Betriebselektronik und die Steuerelektronik sind Bestandteile ein und derselben Geräte-Elektronik eines zusammen mit der Wandlervorrichtung gebildeten konventionellen Coriolis-Massendurchfluß-Meßgeräts bzw. Coriolis-Massendurchfluß-/Dichte-Meßgeräts und können dementsprechend auch in einem einzigen gemeinsamen Schutzgehäuse untergebracht sein.

Zum Abfüllen eines vorgegeben (bzw. vorgebbaren) Volumens bzw. einer vorgegebenen (bzw. vorgebbaren) Masse des Fluids in den erwähnten Entnahmebehälter wird bei dem in der WO-A 02/060805 gezeigten Meßsystem mittels der Stellvorrichtung zunächst die Förderpumpe in Gang gesetzt und hernach der erste Strömungspfad eingestellt, so daß im Ergebnis das Fluid zunächst vom Vorratsbehälter über die Fluid-Zuführleitung weiter durch die Rohre der Wandlereinrichtung weiter zur Fluid-Rückführleitung und von wieder zurück in das Vorratsbehälter strömen gelassen wird. Mittels der Meß- und Betriebselektronik wird zugleich basierend auf den mittels der Wandlereinrichtung währenddessen generierten Meßsignalen eine Dichte des entlang des ersten Strömungspfades strömenden Fluids gemessen, um festzustellen, ob das Fluid ein- oder mehrphasig ausgebildet ist, mithin um festzustellen, ob bzw. inwieweit das geförderte Fluid mit unerwünschten Fremdstoffen beladen ist bzw. eine diesbezüglich vorgegebene Qualitätsanforderung bzw. Spezifikation noch nicht erfüllt. Wird von der Meß- und Betriebselektronik anhand der gemessenen Dichte detektiert, daß ein einphasiges bzw. reines Fluid in der Wandlereinrichtung, mithin im ersten Strömungspfad strömengelassen ist, wird dies an die Steuerelektronik entsprechend übermittelt und werden daraufhin von der Steuerelektronik entsprechende, nämlich das Unterbrechen des ersten Strömungspfades und das Einrichten des zweiten Strömungspfades bewirkende Befehle an die Stellvorrichtung ausgegeben. Im wesentlichen zeitgleich wird in der Meß- und Betriebselektronik, zusätzlich zur Messung der Dichte des strömenden Fluids, eine Messung eines (Massen-) Durchflusses des im zweiten Strömungspfad strömengelassenen Fluids gestartet, um so eine Menge des via zweiten Strömungspfad strömengelassenen, schlußendlich via Fluid-Entnahmeleitung abgegebenen bzw. entsprechend in den Entnahmebehälter abgefüllten Fluids zu ermitteln. Ein hinsichtlich Aufbau und Funktionsweise dem vorbezeichneten Meßsystem vergleichbares, nämliche sowohl einen einstellbaren ersten Strömungspfad als auch einen dazu (alternativ) einstellbaren zweiten Strömungspfad aufweisendes, gleichwohl dem Transferieren von Fluid - hier einer kryogenen, mithin extrem kalten Flüssigkeit - dienenden Meßsystem ist beispielsweise auch in der WO-A 2014/151829 gezeigt. In der WO-A 2008/024112 ist ferner eine für die Verwendung in einem vorbezeichneten Meßsystem geeignete, nämlich erste und zweite Rohre aufweisende Wandlervorrichtung beschrieben, wobei die Rohre eingerichtet sind, voneinander unabhängige Fluidströme zu führen.

Als durchaus problematisch ist in einem konventionellen Meßsystem der vorbezeichneten Art anzusehen, daß die Wandlervorrichtung und die Stelleinrichtung so ausgebildet und angeordnet sind, daß stromabwärts der Wandlervorrichtung Komponenten der Stelleinrichtung, hier nämlich das Rücklaufventil, angeordnet sind, die für durch die Wandlervorrichtung eigentlich in Richtung der Fluid-Entnahmeleitung strömendes Fluid als Leitungsverzweigung wirken können, mit der Konsequenz, daß bei einem allfälligen, zunächst möglicherweise auch unerkannten Defekt der Stelleinrichtung und/oder der Steuerelektronik die mittels der Wandlervorrichtung und der Meß- und Betriebselektronik gemessene Menge an (scheinbar) entlang des zweiten Strömungspfades strömen gelassenem Fluid von der Menge des entlang des gesamten zweiten Strömungspfades, mithin entlang der Fluid-Entnahmeleitung tatsächlich strömen gelassenen Fluids bzw. der in den Entnahmebehälter tatsächlich abgefüllten Menge Fluid erheblich abweichen kann. Ein solcher Defekt des Meßsystems kann beispielsweise darin bestehen, daß von der Meß- und Betriebselektronik oder auch von der Steuerelektronik fehlerhaft ein Befehl zum Starten der Messung des Durchflusses erzeugt wird, ohne daß auch entsprechende, nämlich sowohl das Einrichten des zweiten Strömungspfad als auch das Unterbrechen des ersten Strömungspfads bewirkende Befehle von der Steuerelektronik ausgegeben werden, oder darin, daß von der Steuerelektronik zwar sämtlich Befehle für die Stelleinrichtung korrekt generiert und ausgegeben, jedoch von der Stelleinrichtung nicht sofort und/oder nicht fehlerfrei umgesetzt werden, etwa aufgrund eines Defekts des Rücklaufventils. Als ein besonders kritischer Defekt des Meßsystems wäre beispielsweise ein in einer oder beiden Schaltstellung nicht vollständig absperrendes, mithin Schleichmengen vom Fluid im jeweils eigentlich abgesperrten Strömungspfad zulassendes Rücklaufventil anzusehen. Daraus resultierend können solchen Meßsystemen gelegentlich auch die Anwendung im eichpflichtigen Güterverkehr verwehrt sein oder erst nach Realisierung zusätzlicher, gleichwohl entsprechende Mehrkosten verursachender Maßnahmen zur Detektion bzw. Vermeidung vorbezeichneter Defekte erlaubt werden.

Ausgehend vom vorbezeichneten Stand der Technik bzw. den darin erkannten Nachteilen besteht eine Aufgabe der Erfindung darin, ein Verfahren bzw. ein Meßsystem anzugeben, bei dem auch bei allfälligem Versagen der Steuerelektronik und/oder der Stelleinrichtung ein Fehlmessung der via Fluid-Entnahmeleitung tatsächlich strömen gelassenen bzw. in einen daran angeschlossenen Entnahmebehälter tatsächlich abgegebenen Menge weitgehend vermieden werden kann, und zwar auch unter Beibehaltung einer Positionierung der Wandlervorrichtung stromaufwärts der Fluid-Entnahmeleitung.

Zur Lösung der Aufgabe besteht die Erfindung in einem Meßsystem gemäß dem angefügten unabhängigen Anspruch 1, beispielsweise ausgestaltet als Bestandteil einer Übergabestelle für eichpflichtigen Güterverkehr, zum Messen wenigstens einer Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines strömenden, beispielsweise nämlich in einen Entnahmebehälter mit einer vorgegebenen Menge zu transferierenden, Fluids - beispielsweise eines Gases, einer Flüssigkeit oder einer Dispersion. Das erfindungsgemäße Meßsystem umfaßt dafür:
- eine, beispielsweise mittels eines Rohrs aus Metall gebildete und/oder an ein Fluid vorhaltendes Vorratsbehälter angeschlossene, Fluid-Zuführleitung mit einem offenen ersten Leitungsende, einem offenen zweiten Leitungsende sowie einem sich vom ersten Leitungsende bis zum zweiten Leitungsende erstreckenden Lumen;
- eine Wandlervorrichtung, die ein erstes Rohr, beispielsweise aus Metall, mit einem offenen ersten Rohrende, einem offenen zweiten Rohrende sowie einem sich vom ersten Rohrende bis zum zweiten Rohrende erstreckenden Lumen und ein, beispielsweise zum ersten Rohr baugleiches, zweiten Rohrs, beispielsweise aus Metall, mit einem offenen ersten Rohrende, einem offenen zweiten Rohrende sowie einem sich vom ersten Rohrende bis zum zweiten Rohrende erstreckenden Lumen aufweist, und die dafür eingerichtet ist, wenigstens ein mit der wenigstens einen Meßgröße korrespondierendes, nämlich wenigsten einen von nämlicher Meßgröße abhängigen Signalparameter, beispielsweise einen von nämlicher Meßgröße abhängigen Signalpegel, eine von nämlicher Meßgröße abhängige Signalfrequenz und/oder einen von nämlicher Meßgröße abhängigen Phasenwinkel, aufweisendes bzw. auf eine Änderung der Meßgröße mit einer Änderung nämlichen Signalparameters reagierendes - beispielsweise elektrisches - Meßsignal zu liefern;
- eine, beispielsweise mittels eines Rohrs aus Metall gebildete, Fluid-Rückführleitung mit einem offenen ersten Leitungsende, einem offenen zweiten Leitungsende sowie einem sich vom ersten Leitungsende bis zum zweiten Leitungsende erstreckenden Lumen;
- eine, beispielsweise mittels eines Rohrs aus Metall gebildete, Fluid-Entnahmeleitung mit einem offenen ersten Leitungsende, einem offenen zweiten Leitungsende sowie einem sich vom ersten Leitungsende bis zum zweiten Leitungsende erstreckenden Lumen;
- sowie eine, beispielsweise an sowohl die Fluid-Zuführleitung als auch die Fluid-Rückführleitung sowie wie die Fluid-Entnahmeleitung angeschlossene, Stellvorrichtung zum Einrichten bzw. Unterbrechen von sowohl das Lumen des ersten Rohrs als auch das Lumen des zweiten Rohrs involvierenden Strömungspfaden.

Beim erfindungsgemäßen Meßsystem ist die Stellvorrichtung zudem dafür ausgestaltet, einen vom Lumen der Fluid-Zuführleitung zum Lumen des ersten Rohrs der Wandlervorrichtung, weiter zum Lumen des zweiten Rohrs der Wandlervorrichtung und weiter zum Lumen der Fluid-Rückführleitung, gleichwohl nicht zum Lumen der Fluid-Entnahmeleitung führenden ersten Strömungspfad einzurichten, und ist Stellvorrichtung ausgestaltet, einen vom Lumen der Fluid-Zuführleitung zum Lumen des ersten Rohrs der Wandlervorrichtung und parallel zum Lumen des zweiten Rohrs der Wandlervorrichtung und weiter vom Lumen des ersten Rohrs bzw. vom Lumen des zweiten Rohrs jeweils zum Lumen der Fluid-Entnahmeleitung führenden zweiten Strömungspfad einzurichten.

Ferner bezieht sich die Erfindung gemäß dem angefügten unabhängigen Anspruch 11 auch darauf, ein vorbezeichnetes Meßsystem zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, beispielsweise eines verflüssigtes Gases, beispielsweise nämlich eines Methan und/oder Ethan und/oder Propan und/oder Buthan enthaltenden Flüssiggases und/oder eines verflüssigten Erdgases (LNG), zu verwenden.

Darüberhinaus besteht die Erfindung gemäß dem angefügten unabhängigen Anspruch 12 in einem Verfahren zum Betreiben - beispielsweise nämlich zum Temperieren und/oder zum Reinigen - eines dem Messen wenigstens einer Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines strömenden, beispielsweise nämlich in einen Entnahmebehälter mit einer vorgegebenen Menge zu transferierenden, Fluids - wie z.B. eines Gases, einer Flüssigkeit oder einer Dispersion - dienenden, beispielsweise nämlich als Komponente einer Übergabestelle für eichpflichtigen Güterverkehr eingerichteten, Meßsystems, beispielsweise nämlich Konditionieren eines zu transferierenden Fluids. Hierbei ist insbesondere vorgesehen, daß das Meßsystem
- eine, beispielsweise mittels eines Rohrs aus Metall gebildete und/oder an ein Fluid vorhaltendes Vorratsbehälter angeschlossene, Fluid-Zuführleitung mit einem offenen ersten Leitungsende, einem offenen zweiten Leitungsende sowie einem sich vom ersten Leitungsende bis zum zweiten Leitungsende erstreckenden Lumen,
- eine Wandlervorrichtung, die ein erstes Rohr mit einem offenen ersten Rohrende, einem offenen zweiten Rohrende sowie einem sich vom ersten Rohrende bis zum zweiten Rohrende erstreckenden Lumen und ein - beispielsweise zum ersten Rohr baugleiches - zweites Rohr mit einem offenen ersten Rohrende, einem offenen zweiten Rohrende sowie einem sich vom ersten Rohrende bis zum zweiten Rohrende erstreckenden Lumen aufweist, und die dafür eingerichtet ist, wenigstens ein mit der wenigstens einen Meßgröße korrespondierendes, nämlich wenigsten einen von nämlicher Meßgröße abhängigen Signalparameter, beispielsweise einen von nämlicher Meßgröße abhängigen Signalpegel, eine von nämlicher Meßgröße abhängige Signalfrequenz und/oder einen von nämlicher Meßgröße abhängigen Phasenwinkel, aufweisendes bzw. auf eine Änderung der Meßgröße mit einer Änderung nämlichen Signalparameters reagierendes - beispielsweise elektrisches - Meßsignal zu liefern,
- eine, beispielsweise mittels eines Rohrs aus Metall gebildete, Fluid-Rückführleitung mit einem offenen ersten Leitungsende, einem offenen zweiten Leitungsende sowie einem sich vom ersten Leitungsende bis zum zweiten Leitungsende erstreckenden Lumen,
- sowie eine, beispielsweise mittels eines Rohrs aus Metall gebildete, Fluid-Entnahmeleitung mit einem offenen ersten Leitungsende, einem offenen zweiten Leitungsende sowie einem sich vom ersten Leitungsende bis zum zweiten Leitungsende erstreckenden Lumen umfaßt.

Das erfindungsgemäße Verfahren umfaßt im besonderen:
- ein Einrichten eines ersten Strömungspfades, der vom Lumen der Fluid-Zuführleitung zum Lumen des ersten Rohrs, weiter zum Lumen des zweiten Rohrs und weiter zum Lumen der Fluid-Rückführleitung, gleichwohl nicht zum Lumen der Fluid-Entnahmeleitung führt;
- ein Strömenlassen von Fluid entlang des ersten Strömungspfads, derart, daß ein Teilvolumen des Fluids zunächst durch das Lumen des ersten Rohrs, weiter durch das Lumen des zweiten Rohrs und erst danach weiter zum Lumen der Fluid-Rückführleitung strömt;
- ein Einrichten eines zweiten Strömungspfades, der vom Lumen der Fluid-Zuführleitung zum Lumen des ersten Rohrs und parallel zum Lumen des zweiten Rohrs und weiter vom Lumen des ersten Rohrs bzw. vom Lumen des zweiten Rohrs jeweils zum Lumen der Fluid-Entnahmeleitung führt;
- ein Strömenlassen von Fluid entlang des zweiten Strömungspfads, derart, daß ein Teilvolumen des Fluids durch das Lumen des ersten Rohrs weiter zum Lumen der Fluid-Entnahmeleitung und zeitgleich ein anderes Teilvolumen des Fluids durch das Lumen des zweiten Rohrs weiter zum Lumen der Fluid-Entnahmeleitung strömen;
- ein Generieren des wenigstens einen Meßsignals während des Strömenlassens von Fluid entlang des zweiten Strömungspfads, beispielsweise auch während des Strömenlassens von Fluid entlang des ersten Strömungspfads;
- sowie Verwenden des wenigstens einen Meßsignals zum Ermitteln von Meßwerten für die wenigstens eine Meßgröße, beispielsweise derart, daß ein Sequenz nämlicher Meßwerte einen zeitlichen Verlauf der wenigstens eine Meßgröße des entlang des zweiten Strömungspfads strömendem Fluids repräsentiert.

Weitere Ausgestaltungen der Erfindung sind in den abhängigen Ansprüchen spezifiziert.

Ein Grundgedanke der Erfindung besteht darin, bei einem Meßsystem der in Rede stehenden Art bzw. einem damit umgesetzten Verfahren einen ersten Strömungspfad und einen davon verschiedenen zweiten Strömungspfad vorzusehen bzw. nämliche Strömungspfade wahlweise einzurichten, derart, daß das entlang des zweiten Strömungspfades strömen gelassene Fluid - im Gegensatz zu aus dem Stand der Technik bekannten konventionellen Meßsystemen der in Rede stehenden Art bzw. damit umgesetzten Verfahren - nicht in gleicher Weise durch die Wandlereinrichtung fließen zu lassen, wie entlang des ersten Strömungspfades strömengelassenes Fluid, nämlich derart, daß bei eingerichtetem ersten Strömungspfad ein Teilvolumen des Fluids zunächst durch das Lumen des ersten Rohrs, weiter durch das Lumen des zweiten Rohrs und erst danach weiter zum Lumen der Fluid-Rückführleitung strömen gelassen wird, und daß bei eingerichtetem zweiten Strömungspfad ein Teilvolumen des Fluids durch das Lumen des ersten Rohrs weiter zum Lumen der Fluid-Entnahmeleitung und zeitgleich ein anderes Teilvolumen des Fluids durch das Lumen des zweiten Rohrs weiter zum Lumen der Fluid-Entnahmeleitung strömen gelassen werden. Anders ausgedrückt, enthalten also beim erfindungsgemäßen Meßsystem bzw. Verfahren der erste Strömungspfad eine strömungstechnische Reihenschaltung der wenigstens zwei Rohre der Wandlereinrichtung und der zweite Strömungspfad eine strömungstechnische Parallelschaltung nämlicher wenigstens zwei Rohre der Wandlereinrichtung. Aufgrund einer Anordnung der die ersten bzw. zweiten Strömungspfade des Meßsystems letztlich bildenden Komponenten in der vorbezeichneten Weise können zum einen stromabwärts der Wandlereinrichtung angeordnete Leitungsverzweigungen vermieden werden. Zum anderen kann somit aber auch erreicht werden, daß die mittels der Wandlereinrichtung generierten Meßsignale bereits indikativ für den momentan tatsächlich eingerichtet Strömungspfad sind, mithin mittels der Meß- und Betriebselektronik selbst der momentan tatsächlich eingerichtete Strömungspfad erkannt werden kann, bzw. kann sichergestellt werden, daß selbst bei zunächst unerkannt fehlerhaft eingerichtetem Strömungspfad mittels der Meß- und Betriebselektronik anhand der Meßsignale dennoch lediglich die via Fluid- Entnahmeleitung tatsächlich entnommene Menge gemessen wird. Zur Generierung von den jeweiligen Strömungspfad indizierenden Meßsignalen geeignete Wandlereinrichtungen bzw. zur Bilanzierung von unabhängigen Fluidströme in zwei oder mehr Rohren, mithin zur korrekten Bilanzierung der entlang des zweiten Strömungspfades tatsächlich geförderte Menge Fluid geeignete im Zusammenschluß von Wandlereinrichtung und Meß- und Betriebselektronik gebildeten Meßgeräte sind beispielsweise aus der US-A 2006/0016273, der US-A 47 81 068, der WO-A 00/04344 oder der WO-A 2004/017027 oder WO-A 2008/013545 bekannt. Bei den darin gezeigten Wandlereinrichtungen handelt es sich - wie auch bei der eingangs erwähnten WO-A 02/060805 - jeweils um einen Meßwandler vom Vibrationstyp, nämlich eine solche Wandlereinrichtung, bei der die Rohre im Betrieb zwecks Generierung von von einer Massendurchflußrate des durch die jeweiligen Rohre strömenden Fluids abhängigen Corioliskräften bzw. von von einer Dichte des in den Rohre geführten Fluids abhängigen Trägheitskräften vibrieren gelassen werden. Ein damit gebildetes vibronisches Meßgerät kann dementsprechend beispielsweise als Coriolis-Massendurchfluß-Meßgerät bzw. als Coriolis-Massendurchfluß-Dichte-Meßgerät ausgebildet sein. Beim erfindungsgemäßen Meßsystem können zur Bildung der Wandlervorrichtung außer den vorbezeichneten Meßwandlern vom Vibrationstyp aber auch andere, in der industriellen Meßtechnik ebenfalls etablierte andere Meßprinzipien umsetzende Meßwandler bzw. damit gebildete Skids dienen, beispielsweise nämlich konventionelle magnetisch-induktive Meßwandler, Vortex-Sensoren und/oder Ultraschall-Wandler bzw. damit gebildete konventionelle magnetisch-induktive Durchflußmeßgeräte, Vortex-Durchflußmeßgeräte bzw. Ultraschall-Durchflußmeßgeräte verwendet werden. Meßwandler bzw. Meßgeräte der vorbezeichneten Art, nämlich Coriolis-Massendurchfluß-Meßgeräte, Coriolis-Massendurchfluß-Dichte-Meßgeräte, magnetisch-induktive Durchflußmeßgeräte, Vortex-Durchflußmeßgeräte, Differenzdruck-Durchflußmeßgeräte bzw. Ultraschall-Durchflußmeßgeräte etc., sind u.a. auch in der EP-A 2 568 262, der US-A 2004/0187599, der US-A 2007/0124090, der US-A 2008/0127745, der US-A 2009/0049926, der US-A 2014/0123742, der US-A 52 47 838, der US-A 54 02 685, der US-A 55 57 051, der US-A 55 83 300, der US-A 60 58 787, der WO-A 2004/029559, der WO-A 2010/099276, der WO-A 2014/029484 oder der WO-A 88/02476 ausführlich und detailiert beschrieben und werden von zahlreichen Herstellern, nicht zuletzt auch von der Anmelderin selbst, produziert bzw. angeboten, beispielsweise nämlich auch von der Firma Endress+Hauser Messtechnik GmbH+Co. KG unter der Warenbezeichnung "PROMAG W", "PROMASS 84A", "PROMASS 84F","PROMASS 84X", "CNGMass", "LPGMass", "LNGMass", "PROWIRL D 200", "PROWIRL F 200", "PROWIRL O 200", "PROWIRL R 200", "PROSONIC FLOW B 200", "PROSONIC FLOW 92F" , "PROSONIC FLOW 93C", "DELTATOP DO63C", "DELTATOP DO69S", "DELTATOP DP61D" (http://www.de.endress.com/de/produkte-feldinstrumentierung/Durchflussmessung-Produktübersicht).

Ein weitere Vorteil der Erfindung ist darin zusehen, daß damit nach dem Einrichten des ersten Strömungspfades - alternativ oder in Ergänzung - zur vorbezeichneten Reinigung des Fluids ohne weiteres auch eine Reinigung der Rohre der Wandlereinrichtung bzw. anderer den ersten Strömungspfad bildender Komponenten des Meßsystems, beispielsweise im Zuge einer Reinigungs- und/oder Entkeimungsmaßnahme (CIP, SIP), realsierbar ist, indem wahlweise entsprechende Reinigungs- und/oder Sterilisation-Fluide, beispielsweise Heißdampf, bzw. entsprechende Spülflüssigkeiten, wie z.B. Säuren oder Reinstwasser (≤ 0,1 µS/cm bei 25 °C), entlang des ersten Strömungspfades durch das Meßsystem geleitet werden. Darüberhinaus kann bei dem erfindungsgemäßen Meßsystem bzw. mit dem erfindungsgemäßen Verfahren in vorteilhafter Weise auch eine gelegentlich erforderliche Temperierung der Wandlervorrichtung, nämlich eine Angleichung einer Betriebstemperatur der Wandlereinrichtung an eine Fluidtemperatur, nämlich eine Temperatur des via zweiten Strömungspfad abzufüllenden Fluids, ohne weiteres durchgeführt werden, indem das jeweilige Fluid zunächst solange durch den ersten Strömungspfad strömengelassen wird, bis ein im wesentlichen stationärer thermischer Gleichgewichtzustand der Wandlervorrichtung erreicht ist. Eine solche Temperierung der Wandlereinrichtung kann beispielsweise angezeigt bzw. auch erforderlich sein, um sprunghaften Änderungen der Fluidtemperatur bzw. von mit zeitlichen Änderungen der Fluidtemperatur einhergehenden instationären Temperaturverteilungen innerhalb der Wandlervorrichtung bzw. zeitlichen Schwankungen der Betriebstemperatur der Wandlervorrichtung während des Strömenlassens von Fluid durch den zweiten Strömungspfad bzw. während des Messens der wenigstens einen Meßgröße zu vermeiden, etwa um den in der US-A 2004/0187599, der US-A 2006/0112774, der US-A 2008/0127745, der US-A 2011/0192234 bzw. der US-A 2014/0060154 diskutierten, mit solchen Schwankungen der Betriebstemperatur der Wandlervorrichtung einhergehenden nachteiligen Auswirkungen auf die Meßgenauigkeit des Meßsystems, mit der die Meßgröße schlußendlich gemessen werden kann, wirksam vorzubeugen. Derartige zeitlichen Schwankungen der Betriebstemperatur der Wandlervorrichtung, mithin verminderte Meßgenauigkeiten sind beispielsweise zu besorgen, falls das mittels des Meßsystems zu transferierende Fluid eine extrem tiefe, beispielsweise nämlich weniger als -40 C betragende, bzw. eine extrem hohe, beispielsweise nämlich mehr als 100 C betragende, mithin nennenswert von normaler Raum- bzw. Umgebungstemperatur abweichende Fluidtemperatur aufweist.

Ein weiterer Vorteil der Erfindung ist ferner darin zusehen, daß sie vergleichsweise universell einsetzbar, beispielsweise nämlich für verschiedene Fluide, für unterschiedliche Meßgrößen, und/oder auch für verschiedene Arten von Übergabestellen, beispielsweise nämlich der Betankung von Kraftfahrzeugen, Wasserfahrzeugen bzw. Flugzeugen dienende Tankstellen oder auch dem Beladen bzw. Löschen von mobilen, beispielsweise nämlich auf einem Schiff, einem Eisenbahnwaggon oder Lastkraftwagen installierten, Transportbehältern dienenden Förderanlagen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: ein Meßsystem zum Messen wenigstens einer Meßgröße eines strömenden Fluids;
- Fig. 2a, 2b: in verschiedenen Außenansichten eine für ein Meßsystem gemäß Fig. 1 geeigneten Wandlervorrichtung;
- Fig. 3a, 3b: in verschieden Ansichten eine Variante einer für ein Meßsystem gemäß Fig. 1 geeigneten Wandlervorrichtung;
- Fig. 4: einen mittels eines Meßsystems gemäß Fig. 1 eingerichteten ersten Strömungspfad;
- Fig. 5: einen mittels eines Meßsystems gemäß Fig. 1 eingerichteten - vom ersten Strömungspfad verschiedenen - zweiten Strömungspfad; und
- Fig. 6: ein Ausführungsbeispiel für eine dem Einrichten eines ersten Strömungspfades gemäß Fig. 4 sowie dem Einrichten eines zweiten Strömungspfades gemäß Fig. 5 dienlichen Stelleinrichtung.

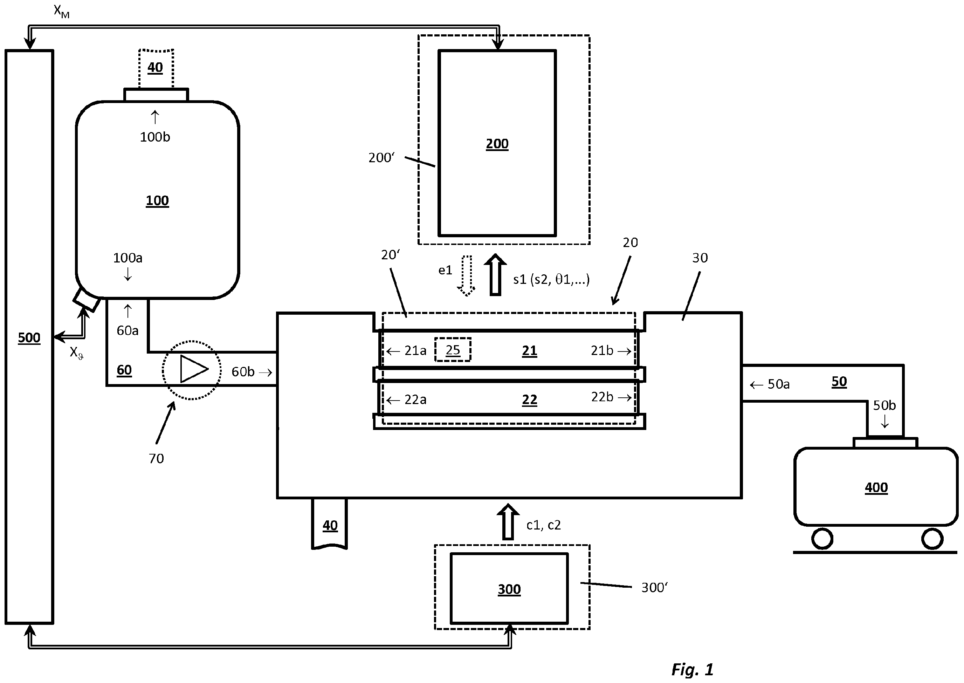

In der Fig. 1 ist ein Ausführungsbeispiel für ein Meßsystem gezeigt, das dafür eingerichtet bzw. vorgesehen ist, wenigstens einer Meßgröße eines strömenden Fluids, beispielsweise nämlich eines Gases, einer Flüssigkeit oder einer Dispersion, zu messen. Bei der wenigstens einen Meßgröße kann es sich beispielsweise um eine Strömungsgeschwindigkeit, eine Massendurchflußrate ṁ, einen Massendurchfluß, eine Volumendurchflußrate v̇, einen Volumendurchfluß oder auch eine andere fluiddynamische Meßgröße handeln. Meßgröße kann aber beispielsweise auch eine das Fluid selbst qualifizierende Stoffkenngröße, wie z.B. eine Dichte ρ oder eine Viskosität η des Fluids, oder auch eine einen thermodynamischen Zustand nämlichen Fluids repräsentierende thermodynamische Meßgröße, wie z.B. ein im Fluid herrschender Druck oder eine Temperatur ϑ des Fluids, sein. Nach einer Ausgestaltung der Erfindung ist vorgesehen, das Meßsystem zum Ermitteln von Meßwerten für wenigstens eine Meßgröße - beispielsweise also einer Massendurchflußrate, eines Massendurchflusses, einer Volumendurchflußrate, eines Volumendurchflusses, einer Dichte, einer Viskosität oder einer Temperatur - eines zu transferierenden, beispielsweise nämlich mit einer vorgegebenen bzw. vorgebbaren Menge von einem Lieferanten an einen Abnehmer zu übergebenden bzw. in einen vorübergehend in das Meßsystem eingegliederten Entnahmebehälter abzufüllenden Fluids zu verwenden. Fluid kann hierbei beispielsweise auch ein verflüssigtes Gas, insb. nämlich ein Methan und/oder Ethan und/oder Propan und/oder Buthan enthaltendes Flüssiggases bzw. ein verflüssigtes Erdgas (LNG), oder auch ein mittels flüssiger Kohlenwasserstoffe gebildetes Stoffgemisch, beispielsweise nämlich ein Erdöl oder ein flüssiger Kraftstoff, sein. Das Meßsystem kann dementsprechend beispielsweise auch als Bestandteil einer Übergabestelle für eichpflichtigen Güterverkehr, wie etwa einer Betankungsanlage, und/oder als ein Bestandteil einer Übergabestelle nach Art der in der erwähnten WO-A 02/060805, WO-A 2008/013545, WO-A 2010/099276, bzw. WO-A 2014/151829 gezeigten Übergabestellen ausgebildet sein.

Das Meßsystem umfaßt dafür u.a. eine Wandlervorrichtung 20, die dafür vorgesehen und dafür eingerichtet ist, wenigstens ein mit der wenigstens einen Meßgröße korrespondierendes, nämlich wenigsten einen von nämlicher Meßgröße abhängigen Signalparameter aufweisendes bzw. auf eine Änderung der Meßgröße mit einer Änderung nämlichen Signalparameters reagierendes, beispielsweise elektrisches oder optisches, Meßsignal s1 zu liefern. Der von der Meßgröße abhängige Signalparameter kann beispielsweise ein von nämlicher Meßgröße abhängiger Signalpegel, eine von nämlicher Meßgröße abhängige Signalfrequenz und/oder ein von nämlicher Meßgröße abhängiger Phasenwinkel sein. Zum Führen des Fluids weist die Wandlervorrichtung 20, wie in Fig. 1 schematisch dargestellt, ein erstes Rohr 21 mit einem offenen ersten Rohrende 21a, einem offenen zweiten Rohrende 21b sowie wenigstens ein sich vom ersten Rohrende bis zum zweiten Rohrende erstreckenden Lumen und ein, beispielsweise zum ersten Rohr baugleiches, zweiten Rohrs 22 mit einem offenen ersten Rohrende 22a, einem offenen zweiten Rohrende 22b sowie einem sich vom ersten Rohrende bis zum zweiten Rohrende erstreckenden Lumen auf. Jedes der wenigstens zwei Rohre 21, 22 der Wandlereinrichtung kann beispielsweise aus einem Metall, beispielsweise Titan, Tantal, Zirkonium bzw. einer mittels wenigstens eines nämlicher Metalle hergestellten Legierung, einem Edelstahl oder einer Nickelbasislegierung, gefertigt sein. Die Wandlereinrichtung kann - wie für in der industriellen Meß- und Automatisierungstechnik durchaus üblich - in vorteilhafter Weise in einem, insb. auch gegen Spritzwasser und/oder Staub dichten und/oder explosionsfesten und/oder als (zweiter) Sicherheitsbehälter dienendes, Wandler-Schutzgehäuse 20', z.B. aus einem Metall und/oder einem Kunststoff, untergebracht sein, beispielsweise derart, daß jedes der beiden Rohre mit seinen jeweiligen zwei Rohrenden beiderseits aus dem Wandler-Schutzgehäuse ragte bzw. jeweils in einen an einem jeweiligen Ende des Wandler-Schutzgehäuses vorgesehenen Anschlußflansch mündet.

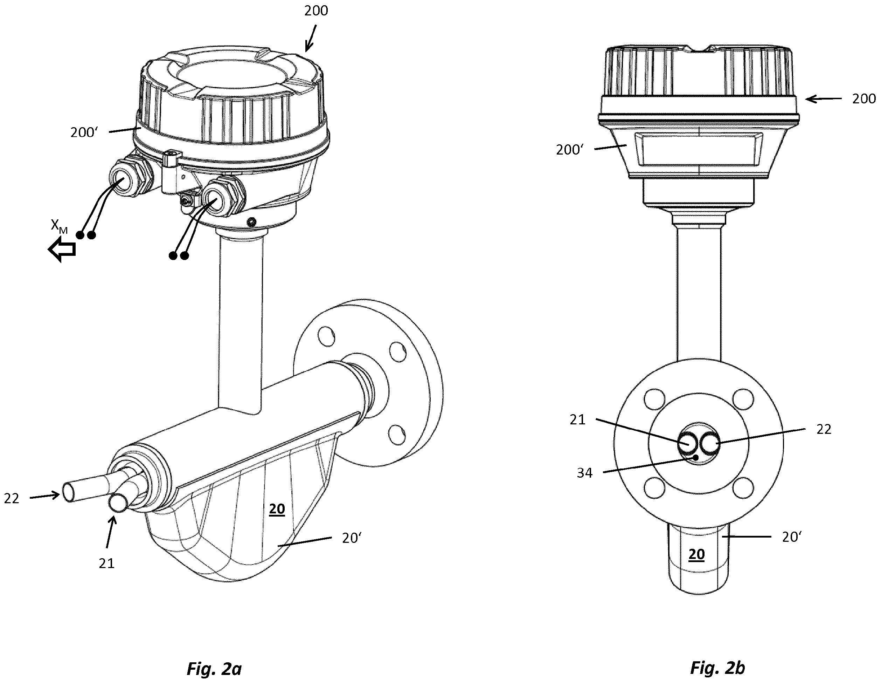

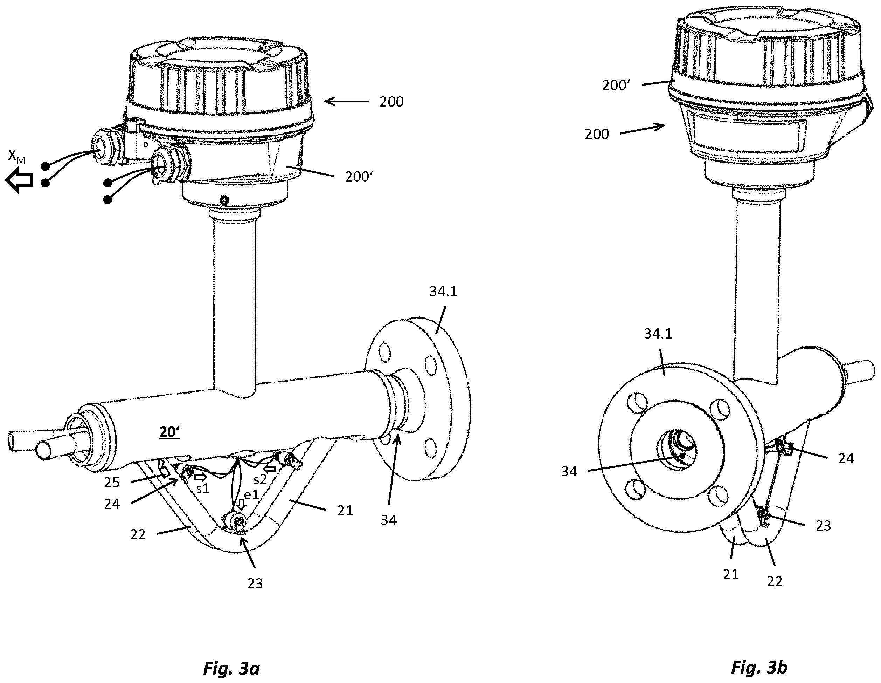

Nach einer weiteren Ausgestaltung der Erfindung ist die Wandlervorrichtung - wie auch in Fig. 2a bzw. 2b schematisch dargestellt - ein Bestandteil eines dem Generieren wenigstens eines mit der wenigstens einen Meßgröße korrespondierenden Meßsignals dienenden eigenständigen Meßgeräts bzw. mittels eines oder mehrerer eigenständigen Meßgeräte gebildete. Die Wandlervorrichtung 20 kann dementsprechend beispielsweise mittels zweier herkömmlicher magnetisch-induktiver Durchfluß-Meßgeräte, mittels zweier herkömmlicher Ultraschall-Durchfluß-Meßgeräte, mittels zweier Vortex-Durchflußmeßgeräte oder auch mittels zweier herkömmlicher Differenzdruck- Durchfluß-Meßgeräte bzw. deren jeweiliger Meßaufnehmer gebildet sein. Die Wandlervorrichtung kann aber beipsielsweise auch Bestandteil eines vibronischen Meßgeräts, insb. nämlich eines Coriolis-Massendurchfluß-Meßgeräts, eines Dichte-Meßgeräts oder Viskositäts-Meßgeräts, sein bzw. zur Bildung der Wandlervorrichtung kann beispielsweise auch ein herkömmlicher vibronischer Meßwandler, etwa auch nach der Art eines der in der US-A 2010/0050783 oder in den erwähnten US-A 2006/0016273, der US-A 47 81 068, der WO-A 00/04344 oder der WO-A 2004/017027 oder WO-A 2008/013545 gezeigten Meßwandler, dienen. Ein Beispiel für einen solchen vibronischen Meßwandler ist in den Fig. 3a bzw. 3b . Dementsprechend umfaßt die Wandlervorrichtung nach einer weiteren Ausgestaltung der Erfindung weiters wenigstens einen Schwingungserreger 23 zum, insb. differenziellen, Anregen und Aufrechterhalten von mechanischen Schwingungen des ersten Rohrs 21 und/oder des zweiten Rohrs 22, insb. nämlich von mechanischen Schwingungen sowohl des ersten Rohrs 21 also auch des zweiten Rohrs 22. Ferner ist vorgesehen im Betrieb des Meßsystems nämlichen Schwingungserregers zum Anregen und Aufrechterhalten von mechanischen Schwingungen des ersten Rohrs 21 und/oder des zweiten Rohrs 22, insb. nämlich von mechanischen Schwingungen sowohl des ersten Rohrs also auch des zweiten Rohrs, zu verwenden. Zum Erfassen von Schwingungsbewegungen des Rohrs 21 bzw. 22 der mittels eines vibronischen Meßwandlers gebildeten Wandlereinrichtung 20 - insb. nämlich zum differenziellen Erfassen von Schwingungsbewegungen sowohl des ersten Rohrs 21 also auch des zweiten Rohrs 22- sowie zum Generieren eines als Meßsignal s1 bzw. als Basis nämlichen Meßsignals s1 dienenden Sensorsignals umfaßt die Wandlervorrichtung nach einer weiteren Ausgestaltung der Erfindung ferner wenigstens einen Schwingungssensor 24. Insbesondere umfaßt hierbei das Generieren des wenigstens einen Meßsignals also auch ein Bewirken von mechanischen Schwingungen des Rohrs 21 bzw. 22 sowie ein Erfassen von, insb. gegengleichen, Schwingungsbewegungen des Rohrs 21 bzw. 22.

Zum Verarbeiten des wenigstens einen Meßsignals s1, beispielsweise nämlich zum Ermitteln von Meßwerten für die wenigstens eine Meßgröße mittels des wenigstens einen Meßsignals, umfaßt das Meßsystem nach einer weiteren Ausgestaltung der Erfindung desweiteren wenigstens eine mit der Wandlervorrichtung elektrisch gekoppelte Meß- und Betriebselektronik 200. Für den vorbezeichneten Fall, daß die Wandlervorrichtung 20 mittels eines virbronischen Meßwandlers gebildet bzw. Bestandteil eines vibronischen Meßgeräts ist, sind ferner sowohl der erwähnte Schwingungserreger 23 als auch der erwähnte Schwingungssensor 24 an die der Meß- und Betriebselektronik 200 elektrisch angeschlossen. Ferner ist die Meß- und Betriebselektronik 200 nach einer weiteren Ausgestaltung der Erfindung auch dafür eingerichtet, ein elektrische Leistung in die Wandlereinrichtung einspeisendes Treibersignal e1 zu liefern, daß im vorgenannten Fall insb. dazu dient, den Schwingungserreger 23 mit in Schwingungsbewegungen der Rohre 21 bzw. 22 zu wandelnder elektrischer Leistung zu versorgen. Die Meß- und Betriebselektronik kann - wie für derartige Elektroniken durchaus üblich - in vorteilhafter Weise zudem in einem, insb. auch gegen Spritzwasser und/oder Staub dichten und/oder explosionsfesten, Elektronik-Schutzgehäuse 200', z.B. aus einem Metall und/oder einem Kunststoff, untergebracht sein. Nämliches Elektronik-Schutzgehäuse 200' mit darin angeordneter Meß- und Betriebselektronik 200 kann - wie für in der industriellen Meß- und Automatisierungstechnik durchaus üblich - unter Bildung eines, beispielsweise auch vorkonfektionierten bzw. eigenständigen, Meßgeräts in Kompaktbauweise zudem an dem erwähnten Wandler-Schutzgehäuse gehaltert sein. Zum Anzeigen von für die wenigstens eine Meßgröße ermittelten Meßwerten vor Ort kann die Meß- und Betriebselektronik 200 ferner ein Anzeige-Element (HMI), beispielsweise nämlich einen mittels Dünnschichttransistoren hergestellten Bildschirm (LCD, TFT, OLED), aufweisen.

Desweiteren umfaßt das Meßsystem - wie auch in Fig. 1 dargestellt - eine, insb. mittels eines Rohrs aus Metall gebildete und/oder an ein Fluid vorhaltenden Vorratsbehälter angeschlossene, Fluid-Zuführleitung 60 mit einem offenen ersten Leitungsende 60a, einem offenen zweiten Leitungsende 60b sowie einem sich vom ersten Leitungsende bis zum zweiten Leitungsende erstreckenden Lumen, eine, insb. mittels eines Rohrs aus Metall gebildete, Fluid-Rückführleitung 40 mit einem offenen ersten Leitungsende 40a, einem offenen zweiten Leitungsende 40b sowie einem sich vom ersten Leitungsende bis zum zweiten Leitungsende erstreckenden Lumen sowie eine, insb. mittels eines Rohrs aus Metall gebildete, Fluid-Entnahmeleitung 50 mit einem offenen ersten Leitungsende 50a, einem offenen zweiten Leitungsende 50b sowie einem sich vom ersten Leitungsende bis zum zweiten Leitungsende erstreckenden Lumen.

Nach einer weiteren Ausgestaltung der Erfindung ist ferner vorgesehen, daß das Meßsystem einen, z.B. mittels eines - mobilen oder stationären - Tanks gebildeten, Vorratsbehälter 100 mit einem zumindest teilweise mit dem Fluid befüllten Lumen umfaßt. Der Vorratsbehälter 100 ist nach einer weiteren Ausgestaltung der Erfindung ferner dafür vorgesehen bzw. eingerichtet, im Lumen das Fluid mit einer Temperatur von weniger als -40 °C vorzuhalten bzw. nämliches Fluid für einen vorgebbaren Zeitraum auf einer Temperatur von weniger als -40 °C zu halten. Nach einer anderen Ausgestaltung der Erfindung ist der Vorratsbehälter 100 dafür vorgesehen bzw. eingerichtet, im Lumen das Fluid mit einer Temperatur von mehr als 100 °C vorzuhalten bzw. das Fluid für einen vorgebbaren Zeitraum auf einer Temperatur von mehr als 100 °C zu halten. Der Vorratsbehälter 100 kann dementsprechend beispielsweise auch von thermisch isolierendem Material umhüllt sein und/oder mittels einer entsprechenden Temperiervorrichtung, beispielsweise einem Kühlaggregat oder einem Dampfkesselanlage, aktiv gekühlt bzw. aktiv beheizt werden. Wie in Fig. 1 angedeutet, kann die Fluid-Zuführleitung 60 unmittelbar an den Vorratsbehälter 100, beispielsweise nämlich eine entsprechende Entnahmeöffnung 100a des Vorratsbehälters 100, angeschlossen sein, derart, daß das Lumen der Fluid-Zuführleitung 60 via Leitungsende 60a mit dem Lumen des der Vorratsbehälters 100 kommuniziert. Darüberhinaus kann es zudem auch von Vorteil sein, auch die Fluid-Rückführleitung 40 mit dem zweiten Leitungsende an den Vorratsbehälter 100, beispielsweise nämlich eine entsprechende Einfüllöffnung 100b des Vorratsbehälters 100, anzuschließen, derart, daß das Lumen Fluid-Rückführleitung 40 auch mit dem Lumen des Vorratsbehälters 100 kommuniziert, mithin durch die Fluid-Rückführleitung 40 strömen gelassenes Fluid zurück in den Vorratsbehälter 100 geleitet werden kann.

Nicht zuletzt für den erwähnten Fall, daß das Meßsystem als Bestandteil einer Übergabestelle ausgebildet ist, die dazu dient Fluid von einem Lieferanten an einen Kunden zu übergeben umfaßt das Meßsystem nach einer weiteren Ausgestaltung der Erfindung ferner einen stromabwärts der Fluid-Entnahmeleitung 50 angeordneten, beispielsweise an die Fluid-Entnahmeleitung lediglich temporär angeschlossenen bzw. mobilen, Entnahmebehälter 400.

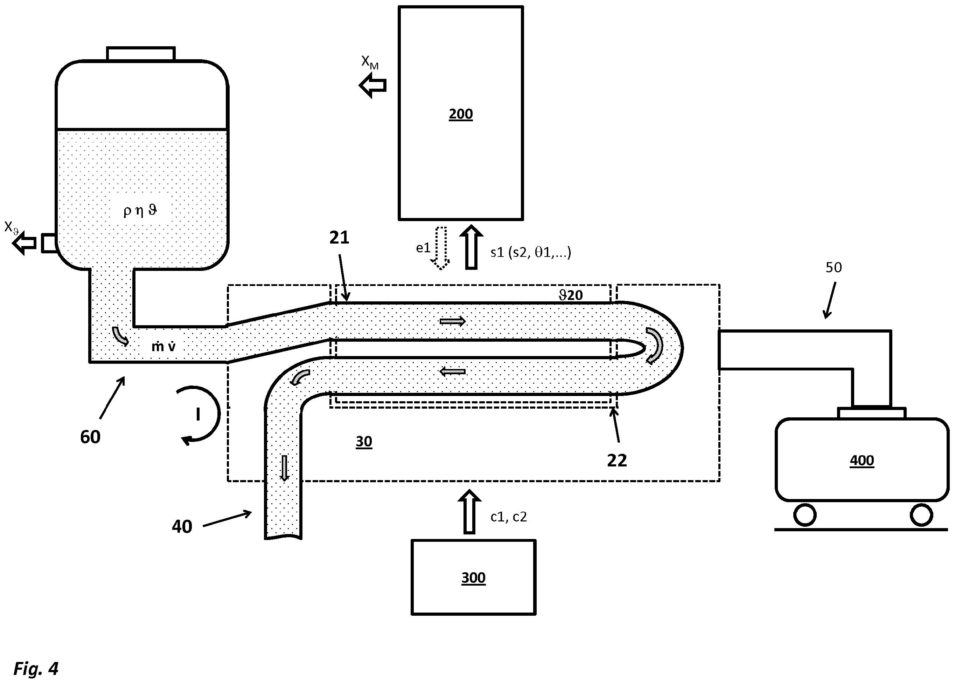

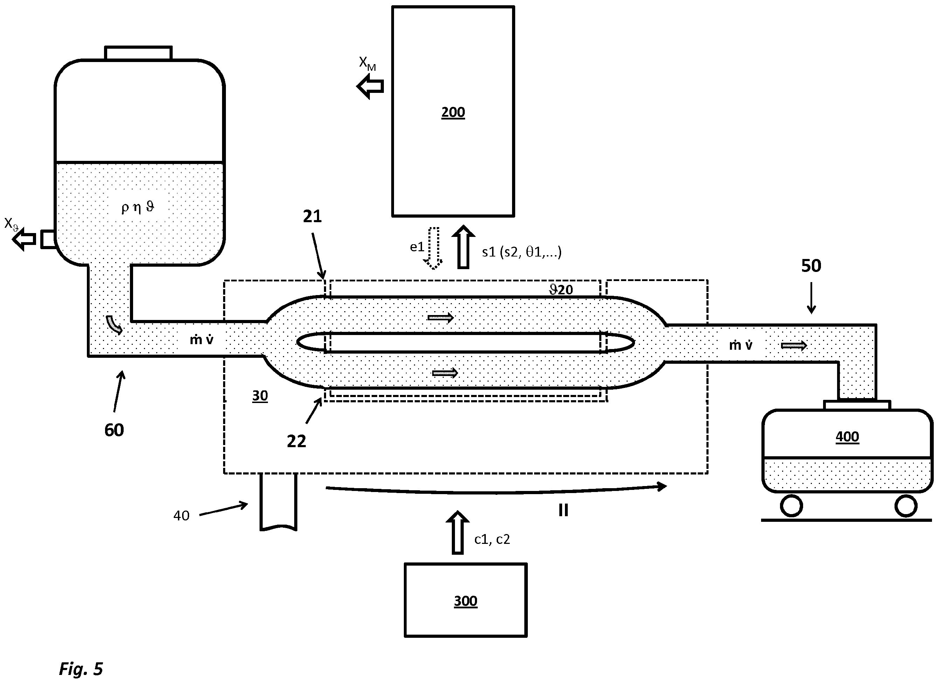

Erfindungsgemäß ist ferner vorgesehen, im Betrieb des Meßsystems zeitweise - beispielsweise nämlich im Zuge einer Inbetriebnahme oder im Zuge eines Wiederanfahrens nach einer vorangegangen Ruhephase oder im Zuge einer am Meßsystem vollzogenen Reinigungsmaßnahme - einen ersten Strömungspfade (I) einzurichten, der - wie in Fig. 4 schematisch dargestellt bzw. aus einer Zusammenschau der Fig. 1 und 4 ohne weiteres ersichtlich - vom Lumen der Fluid-Zuführleitung 60 zum Lumen des ersten Rohrs 21, weiter zum Lumen des zweiten Rohrs und weiter zum Lumen der Fluid-Rückführleitung, gleichwohl nicht zum Lumen der Fluid-Entnahmeleitung 50 führt, und hernach Fluid entlang nämlichen ersten Strömungspfads (I) strömen zu lassen, derart, daß ein Teilvolumen des Fluids zunächst durch das Lumen des ersten Rohrs 21, weiter durch das Lumen des zweiten Rohrs 22 der Wandlereinrichtung und erst danach weiter zum Lumen der Fluid-Rückführleitung 40 strömt. Ferner ist vorgesehen zeitweise - beispielsweise zwecks des Transferierens von Fluid von dem erwähnten, stromaufwärts der Fluid-Zuführleitung 60 angeordneten Vorratsbehälter zu dem erwähnten, stromabwärts der Fluid-Entnahmeleitung 50 angeordneten Entnahmebehälter 400 - einen zweiten Strömungspfad (II) einzurichten, der - wie in Fig. 5 schematisch dargestellt bzw. aus einer Zusammenschau der Fig. 1 und 5 ohne weiteres ersichtlich - vom Lumen der Fluid-Zuführleitung 60 zum Lumen des ersten Rohrs 21 der Wandlereinrichtung 20 und parallel zum Lumen des zweiten Rohrs und weiter vom Lumen des ersten Rohrs 21 bzw. vom Lumen des zweiten Rohrs 22 jeweils zum Lumen der Fluid-Entnahmeleitung 50 führt, und hernach Fluid entlang nämlichen zweiten Strömungspfads (II) strömen zu lassen, derart, daß ein Teilvolumen des Fluids durch das Lumen des ersten Rohrs 21 weiter zum Lumen der Fluid-Entnahmeleitung 50 und zeitgleich ein anderes Teilvolumen des Fluids durch das Lumen des zweiten Rohrs 22 der Wandlereinrichtung weiter zum Lumen der Fluid-Entnahmeleitung 50 strömen. Ferner ist nach einer weiteren Ausgestaltung der Erfindung vorgesehen, den zweiten Strömungspfad (II) so einzurichten, daß dieser - wie auch in Fig. 5 angedeutet - nicht zum Lumen der Fluid-Rückführleitung führt.

Das Meßsystem kann dementsprechend also in der Weise betrieben werden, indem - wie auch in Fig. 4 schematisch dargestellt - zunächst der erste Strömungspfad (I) eingerichtet und hernach Fluid entlang nämlichen ersten Strömungspfads (I) strömen gelassen wird, derart, daß ein Teilvolumen des Fluids zunächst durch das Lumen des ersten Rohrs 21, weiter durch das Lumen des zweiten Rohrs 22 und erst danach weiter zum Lumen der Fluid-Rückführleitung 40 strömt, und indem - wie auch in Fig. 5 schematisch dargestellt bzw. aus einer sequentiellen Zusammenschau der Fig. 4 und 5 ersichtlich - erst später der zweite Strömungspfad (II) eingerichtet und hernach dann Fluid entlang nämlichen zweiten Strömungspfads (II) strömen gelassen wird, derart, daß ein Teilvolumen des Fluids durch das Lumen des ersten Rohrs weiter zum Lumen der Fluid-Entnahmeleitung 50 und zeitgleich ein anderes Teilvolumen des Fluids durch das Lumen des zweiten Rohrs weiter zum Lumen der Fluid-Entnahmeleitung strömen. Das Strömenlassen von Fluid entlang des zweiten Strömungspfads (II) kann - wie auch aus einer Zusammenschau der Fig. 1 und 5 ohne weiteres ersichtlich - ferner ein Strömenlassen des vorbezeichneten Teilvolumens des Fluids vom ersten Rohrende 21a des Rohrs 21 in Richtung von dessen zweiten Rohrende 21b durch das Lumen des Rohrs 21 sowie ein zeitgleiches Strömenlassen des vorbezeichneten anderen Teilvolumens des Fluids vom ersten Rohrende 22a des Rohrs 22 in Richtung von dessen zweiten Rohrende 22b durch das Lumen des Rohrs 22 umfassen. Wie aus einer Zusammenschau der Fig. 1 und 4 ferner ersichtlich kann das Strömenlassen von Fluid entlang des ersten Strömungspfads (I) zudem ein Strömenlassen eines Teilvolumens des Fluids vom ersten Rohrende 21a des Rohrs 21 in Richtung von dessen zweiten Rohrende 21b durch das Lumen des ersten Rohrs 21 und ein Weiterströmenlassen nämlichen Teilvolumens des Fluids vom zweiten Rohrende 22b des Rohrs 22 in Richtung von dessen ersten Rohrende 22a durch das Lumen des Rohrs 22 umfassen. Das entlang des ersten Strömungspfads (I) strömen gelassene Fluid kann beispielsweise dazu dienen, die Wandlervorrichtung zu temperieren und/oder zumindest Teile des Meßsystems, insb. nämlich die Wandlervorrichtung 20 und/oder die Fluid-Zuführleitung 60, zu reinigen und/oder das im Vorratsbehälter (noch) vorgehaltene Fluid, hernach via zweiten Strömungspfad zu transferierende Fluid zu konditionieren. Nach einer weiteren Ausgestaltung der Erfindung ist ferner vorgesehen, daß der erste Strömungspfad und der zweite Strömungspfad alternierend einzurichten sind bzw. eingerichtet werden, mithin das Einrichten des zweiten Strömungspfades (II) ein Unterbrechen des ersten Strömungspfades und/oder das Einrichten des ersten Strömungspfades (I) ein Unterbrechen des zweiten Strömungspfades (II) umfaßt. Für den vorbezeichneten Fall, daß das Meßsystem den Vorratsbehälter 100 aufweist, umfaßt das Einrichten des ersten Strömungspfades (I) dementsprechend auch ein Verbinden des Lumens nämlichen Vorratsbehälters 100 mit dem Lumen der Fluid-Zuführleitung 60, derart, daß der erste Strömungspfad (I) vom Lumen des Vorratsbehälters 100 weiter zum Lumen der Fluid-Zuführleitung 60 führt. Gleichermaßen umfaßt hierbei auch das Einrichten des zweiten Strömungspfades (II) ein Verbinden des Lumens des Vorratsbehälters 100 mit dem Lumen der Fluid-Zuführleitung, derart, daß der zweite Strömungspfad (II) vom Lumen des Vorratsbehälters 100 weiter zum Lumen der Fluid-Zuführleitung 60 führt. Für den anderen erwähnten Fall, daß das Meßsystem den erwähnten Entnahmebehälter 400 aufweiset, umfaßt das Einrichten des zweiten Strömungspfades (II) nach einer weitere Ausgestaltung der Erfindung ferner auch ein Anschließen des Entnahmebehälters 400 an die Fluid-Entnahmeleitung 50, derart, daß der zweite Strömungspfad (II) vom Lumen der Fluid-Entnahmeleitung weiter zum Lumen des Entnahmebehälters 400 führt.

Zum Fördern von Fluid entlang des ersten Strömungspfads (I) bzw. entlang des zweiten Strömungspfads (II) kann das Meßsystem ferner wenigstens eine - beispielsweise in den Verlauf der Fluid-Zuführleitung 60 eingesetzte oder strömungstechnisch zwischen Fluid-Zuführleitung 60 und Vorratsbehälter 100 in das Meßsystem eingegliederte - Förderpumpe 70, wie z.B. eine elektromotorisch betriebene Kreiselpumpe, aufweisen.

Erfindungsgemäß ist desweiteren vorgesehen, mittels der Wandlereinrichtung 20 das wenigstens eine Meßsignal s1 zumindest zeitweise, insb. nämlich zumindest während des Strömenlassens von Fluid entlang des zweiten Strömungspfads, zu generieren sowie nämliches Meßsignal s1 zum Ermitteln wenigstens eines die wenigstens eine Meßgröße repräsentierenden Meßwerts X_{M} bzw. zum Ermitteln von Meßwerten X_{M,i} für die wenigstens eine Meßgröße zu verwenden, beispielsweise derart, daß ein Sequenz nämlicher Meßwerte X_{M,i} einen zeitlichen Verlauf der wenigstens eine Meßgröße des entlang des zweiten Strömungspfads (II) strömendem Fluids repräsentiert, ggf. auch in Echtzeit. Dafür ist die erwähnte Meß- und Betriebselektronik 200 nach einer weiteren Ausgestaltung der Erfindung dafür eingerichtet, das wenigstens eine Meßsignal s1 zu verarbeiten, insb. nämlich mittels des wenigstens einen Meßsignals s1 den Meßwert X_{M} bzw. die Meßwerte X_{M,i} für die wenigstens eine Meßgröße zu ermitteln. Nach einer weiteren Ausgestaltung der Erfindung ist heirebei ferner vorgesehen, das wenigstens eine Meßsignal s1 und/oder zumindest eine Teilmenge der damit generierten Meßwerte X_{M,i} für die wenigstens eine Meßgröße zum Ermitteln von solchen - etwa einer Bilanzierung bzw. Abrechnung dienlichen - Meßwerten, die eine Menge - beispielsweise nämlich einer Masse und/oder eines Volumens - des durch den zweiten Strömungspfad (II), etwa während eines vorgegebenen Zeitintervalls insgesamt, strömen gelassenen Fluids repräsentieren, etwa auch in der Weise, daß ein Sequenz nämlicher Meßwerte einen zeitlichen Verlauf der Menge des durch den zweiten Strömungspfad gelassenen Fluids repräsentiert. Nämliche, die Menge des durch den zweiten Strömungspfad (II) strömenden Fluids repräsentierende Meßwerte können beispielsweise auch dazu dienen, mit einem entsprechend vorgegebenen, beispielsweise eine vorab festgelegte Abgabemenge des Fluids repräsentierenden, Schwellenwert verglichen zu werden um basierend darauf feststellen zu können, ob weiterhin Fluid entlang des zweiten Strömungspfad (II) strömen zu lassen ist, oder ob eine ausreichende Menge Fluid entlang des zweiten Strömungspfad (II) strömen gelassen ist. Dementsprechend ist gemäß einer weiteren Ausgestaltung der Erfindung ferner vorgesehen, den zweiten Strömungspfads zu unterbrechen, falls ein Überschreiten nämlichen Schwellenwerts durch wenigstens einen der die Menge des durch den zweiten Strömungspfad strömen gelassenen Fluids repräsentierenden Meßwerte festgestellt ist.

Nach einer weiteren Ausgestaltung der Erfindung ist ferner vorgesehen das wenigstens eine Meßsignal s1 sowohl während des Strömenlassens von Fluid entlang des ersten Strömungspfads (I) als auch während des Strömenlassens von Fluid entlang zweiten Strömungspfads (II) zu generieren sowie nämliches Meßsignal s1 zum Ermitteln von Meßwerten für die wenigstens eine Meßgröße verwenden; dies im besonderen auch in der Weise, daß ein Sequenz der basierend auf nämlichen Meßsignal generierten Meßwerte einen zeitlichen Verlauf der wenigstens eine Meßgröße auch des entlang des ersten Strömungspfads (I) strömendem Fluids repräsentiert und/oder unter Verwendung desselben Signalparameters wie bei der Ermittlung der Meßwerte für das entlang des zweiten Strömungspfades strömen gelassen Fluid.

Nach einer weiteren Ausgestaltung der Erfindung handelt es sich bei der wenigstens einen Meßgröße um eine Massendurchflußrate ṁ des durch das Meßsystem strömengelassenen Fluids bzw. um eine davon abgeleitete Meßgröße, beispielsweise nämlich eine während eines vorgegebenen Zeitintervalls insgesamt durch die Wandlereinrichtung und/oder entlang des zweiten Strömungspfades strömengelassene Masse des Fluids. Nach einer weiteren Ausgestaltung ist ferner vorgesehen, das wenigstens eine Meßsignal zum Ermitteln auch von Meßwerten für wenigstens eine weitere, nämlich von der wenigstens einen (ersten) Meßgröße verschiedende (zweite) Meßgröße zu verwenden, etwa in der Weise, daß ein Sequenz nämlicher Meßwerte einen zeitlichen Verlauf der weiteren Meßgröße des entlang des ersten Strömungspfads strömendem Fluids repräsentiert und/oder daß ein Sequenz nämlicher Meßwerte einen zeitlichen Verlauf der weiteren Meßgröße des entlang des zweiten Strömungspfads strömendem Fluids repräsentiert; im besonderen ist hierbei vorgesehen, daß es sich bei der wenigstens einen weiteren (zweiten) Meßgröße um eine Dichte ρ des Fluids handelt, beispielsweise nämlich um die Dichte zumindest des entlang des ersten Strömungspfads strömen gelassenen Fluids. Der Meßwert X_{M} bzw. die Meßwerte X_{M,i} können ferner beispielsweise mittels des erwähnten Anzeigeelements vor Ort zur angezeigt und/oder über eine - drahtgebundene und/oder Funkwellen basierte - Datenverbindung an ein übergeordnetes elektronisches Datenverarbeitungssystem, beispielsweise ein Prozeßleitsystem bzw. eine speicherprogrammierbare Steuerung (SPS), übermittelt werden.

Nach einer weiteren Ausgestaltung der Erfindung ist zudem vorgesehen, mittels der Wandlereinrichtung das wenigstens eine Meßsignal s1 zumindest zeitweise auch während des Strömenlassens von Fluid entlang des ersten Strömungspfads (I) zu generieren, beispielsweise um unter Verwendung nämlichen Meßsignals wenigstens einen die wenigstens eine Meßgröße des im ersten Strömungspfad strömengelassenen Fluids repräsentierenden Meßwert bzw. eine Viehlzahl von Meßwerten X_{M,i} für nämliche Meßgröße zu ermitteln, beispielsweise auch derart, daß eine Sequenz nämlicher Meßwerte einen zeitlichen Verlauf der wenigstens eine Meßgröße des entlang des ersten Strömungspfads (I) strömendem Fluids repräsentiert. Das während des Strömenlassens von Fluid entlang des ersten Strömungspfads generierte Meßsignal bzw. die darauf basierenden Meßwerten X_{M,i} können ferner beispielsweise auch dazu dienen, die Wandlereinrichtung 20 bzw. das damit gebildete Meßsystem zu kalibrieren, beispielsweise nämlich einen mit dem erwähnten Signalparameter des wenigstens einen Meßsignals korrespondierenden (Skalen-) Nullpunkt des Meßsystems bzw. einen Nullpunkt-Fehler zu ermitteln ("as found"), und/oder einen Nullabgleich der erwähnten Meß- und Bertiebselektronik 200 vorzunehmen, beispielsweise nämlich den Nullpunkt des Meßsystem nachzustellen ("as left"). Dementsprechend ist gemäß einer weiteren Ausgestaltung der Erfindung ferner vorgesehen, das wenigstens eine Meßsignal s1 auch zum Kalibrieren der Meß- und Betriebselektronik 200 zu verwenden. Nämliches Kalibrieren kann, falls aufgrund eines festgestellten zu großen Meßfehlers, nämlich einer zu großen Abweichung zwischen der wenigstens einen Meßgröße und einem dafür ermittelten Meßwert erforderlich, zudem auch ein Justieren der Meß- und Betriebselektronik 200, beispielsweise einen Nullpunktabgleich, umfassen, derart, daß hernach nämlicher Meßfehler innerhalb eines dafür vorgegebenen Toleranzbereichs liegt. Alternativ oder in Ergänzung können während des Strömenlassens von Fluid entlang des ersten Strömungspfads (I) generierte Meßwerte auch dazu dienen, eine vorab spezifizierte Qualität des Fluids, beispielsweise ein Ausmaß einer allfälligen Beladung mit Fremdstoff(en), zu überwachen, um basierend darauf, feststellen bzw. entscheiden zu können, ob Fluid die vorbezeichnete Spezifikation tatsächlich erfüllt, mithin anstatt entlang des ersten Strömungspfades (I) nunmehr entlang des zweiten Strömungspfades (II) strömen gelassen bzw. in den vorbezeichneten Entnahmebehälter 400 transferiert werden kann.

Das durch den zweiten Strömungspfad (II) strömen gelassene, beispielsweise nämlich zu transferierende, Fluid kann, wie bereits erwähnt, beispielsweise ein Methan und/oder Ethan und/oder Propan und/oder Buthan enthaltendes Fluid bzw. ein verflüssigtes Gas, beispielsweise nämlich ein verflüssigtes Erdgas (LNG) bzw. ein Methan, Ethan, Propan und/oder Buthan enthaltendes Flüssiggas (LPG, NGL), ein Erdöl oder auch ein flüssiger Kraftstoff sein. Ferner kann das durch den zweiten Strömungspfad (II) strömen gelassene Fluid auch dem durch den ersten Strömungspfad (I) strömen gelassenen Fluid entsprechen bzw. können das durch den ersten Strömungspfad (I) strömen gelassene Fluid und das durch den zweiten Strömungspfad (II) strömen gelassenen Fluid jeweils ein und demselben Reservoir - beispielsweise nämlich dem Vorratsbehälter 100 - entnommen sein. Für den vorbeschriebenen Fall, daß sowohl die Fluid-Zuführleitung 60 als auch die Fluid-Rückführleitung 40 an den erwähnten Vorratsbehälter 100 angeschlossen sind, mithin der erste Strömungspfad (I) einen in sich geschlossenen, gleichwohl durch den Vorratsbehälter bzw. dessen Lumen hindurchführenden Kreislauf bildet, kann das Fluid bzw. das später via zweiten Strömungspfad (II) zu transferierende, zunächst jedoch im Vorratsbehälter 100 vorgehaltene Fluid hinsichtlich seiner Zusammensetzung bzw. Qualität dadurch konditioniert - beispielsweise nämlich entgast bzw. gereinigt - werden, indem das Fluid, wie u.a. auch in der eingangs erwähnten WO-A 02/060805 vorgeschlagen, zunächst entlang nämlichen (in sich geschlossenen) ersten Strömungspfads (I) strömen gelassen wird, solange, bis sichergestellt werden kann, daß das hernach via zweiten Strömungspfad (II) zu führende bzw. zu transferierende Fluid weitgehend frei von unerwünschten Fremdstoffen ist. Für den vorbezeichneten Fall, daß das Meßsystem den Vorratsbehälter 100 aufweist, umfaßt daher das Einrichten des ersten Strömungspfades (I) nach einer weiteren Ausgestaltung der Erfindung ferner auch ein Verbinden des Lumens der Fluid-Rückführleitung 40 mit dem Lumen des Vorratsbehälters 100, derart, daß der erste Strömungspfad (I) vom Lumen der Fluid-Rückführleitung 40 weiter zum Lumen des Vorratsbehälters 100 führt.

Wie u.a. auch in den eingangs erwähnten WO-A 2014/151829 erörtert, kann es bei Meßsystemen der in Rede stehenden Art zudem auch von Vorteil bzw. gelegentlich auch erforderlich sein, die Wandlereinrichtung 20, insb. nämlich zumindest deren Rohre, bereits vor dem Einrichten des zweiten Strömungspfades (II) bzw. dem Transferieren von Fluid auf eine Betriebstemperatur ϑ20 zu bringen und während des Messens auch entsprechend halten, die möglichst gleich einer Fluid-Temperatur ϑ, nämlich einer Temperatur des eigentlich zu messenden, hier nämlich durch den zweiten Strömungspfad (II) strömen gelassenen bzw. zunächst im erwähnten Vorratsbehälter 100 vorgehaltenen Fluids ist, bzw. die während der eigentlichen Messung, mithin zumindest während des Strömenlassens von Fluid entlang des zweiten Strömungspfades weitgehend konstant ist; dies nicht zuletzt auch deshalb, um somit ein ungünstige Beeinflussung des Fluids durch die Wandlereinrichtung 200, beispielsweise nämliche eine unerwünschte Erwärmung bzw. Abkühlung des Fluids, zu verhindern, und/oder um somit aus allfälligen Abhängigkeiten der Meßgenauigkeit des Meßsystems von einem Temperaturunterschied Δϑ zwischen nämlicher Betriebstemperatur ϑ20 und der, beispielsweise extremen, nämlich weniger als -40 °C oder mehr als 100 °C betragenden, Fluid-Temperatur ϑ des in der Wandlervorrichtung 20 momentan geführten Fluids und/oder zeitlichen Änderungen (Δϑ/Δt) nämlichen Temperaturunterschieds Δϑ resultierende, gleichwohl unerwünschte Meßfehler zu minimieren bzw. zu vermeiden. Dementsprechend ist gemäß einer weiteren Ausgestaltung der Erfindung ferner vorgesehen, im Betrieb des Meßsystems wiederkehrend den, insb. während des Strömenlassens von Fluid entlang des ersten Strömungspfads, zwischen Betriebstemperatur ϑ20 der Wandlervorrichtung und der Fluid-Temperatur ϑ existierenden Temperaturunterschied zu ermitteln. Ferner erfolgt gemäß einer weiteren Ausgestaltung der Erfindung das Einrichten des zweiten Strömungspfads (II) erst nachdem ein Temperaturunterschied Δϑ ermittelt ist, der innerhalb eines dafür vorgegebenen, beispielsweise nämlich einen stationären thermischen Gleichgewichtzustand der Wandlervorrichtung bzw. des Meßsystems repräsentierenden, Toleranzbereichs liegt.

Um den vorbezeichneten Temperaturunterschied Δϑ im Betrieb des Meßsystems ermitteln zu können bzw. um im Betrieb des Meßsystems möglichst genau abschätzen zu können, ob die Wandlervorrichtung 20 einen mit der tatsächlichen Fluid-Temperatur ϑ korrespondierenden stationären thermischen Gleichgewichtzustand eingenommen hat, ist nach einer weiteren Ausgestaltung der Erfindung daher ferner vorgesehen, im Betrieb des Meßsystems auch die Betriebstemperatur ϑ20 der Wandlervorrichtung 20, beispielsweise nämlich eine Temperatur des ersten Rohres 21 und/oder des zweiten Rohrs 22, wiederkehrend zu ermitteln, beispielsweise um anhand dessen allfällige zeitliche Änderungen der Betriebstemperatur ϑ20 bzw. des vorbezeichneten Temperaturunterschied Δϑ zu überwachen. Nach einer weiteren Ausgestaltung der Erfindung ist die Wandlervorrichtung 20 daher ferner dafür eingerichtet, wenigstens ein mit nämlicher Betriebstemperatur ϑ20 korrespondierendes, nämlich wenigsten einen davon abhängigen Signalparameter, beispielsweise einen von der Betriebstemperatur ϑ20 abhängigen Signalpegel, aufweisendes bzw. auf eine Änderung der Betriebstemperatur ϑ20 mit einer Änderung nämlichen Signalparameters reagierendes Hilfsmeßsignal θ1 zu liefern. Hilfsmeßsignal kann beispielsweise ein elektrisches Signal mit einer von der Betriebstemperatur abhängigen Spannung und/oder einem von der Betriebstemperatur abhängigen Strom sein. Zum Generieren des Hilfsmeßsignals umfaßt das Meßsystem nach einer weiteren Ausgestaltung der Erfindung ferner wenigstens einen mit dem Rohr 21 thermisch gekoppelten Temperatursensor 25, der dafür eingerichtet ist, eine Temperatur nämlichen Rohrs zu erfassen und in das diese repräsentierendes Hilfsmeßsignal θ1 zu wandeln. Ferner ist die Meß- und Betriebselektronik 200 dafür eingerichtet, das wenigstens eine Hilfsmeßsignal θ1 zu verarbeiten, insb. nämlich mittels des wenigstens einen Hilfsmeßsignals θ1 Meßwerte X_{M,i} für die wenigstens eine Meßgröße und/oder Meßwerte für die Betriebstemperatur ϑ20 bzw. Temperatur des Rohrs 21 zu ermitteln. Ferner ist nach einer weiteren Ausgestaltung der Erfindung vorgesehen, das wenigstens eine Hilfsmeßsignal θ1 zumindest zeitweise auch während des Strömenlassens von Fluid entlang des ersten Strömungspfads (I) zu generieren bzw. nämliches Hilfsmeßsignal dazu zu verwenden, Meßwerte für die Betriebstemperatur der Wandlervorrichtung zu ermitteln, beispielsweise auch derart, daß ein Sequenz nämlicher Meßwerte einen zeitlichen Verlauf der Betriebstemperatur ϑ20 der Wandlervorrichtung repräsentiert.

Gemäß einer weiteren Ausgestaltung der Erfindung ist ferner vorgesehen, die Fluid-Temperatur ϑ wiederkehrend zu ermitteln, beispielsweise um den erwähnten Temperaturunterschied Δϑ als Differenz zwischen der aktuell ermittelten Betriebstemperatur ϑ20 und der aktuell ermittelten Fluid-Temperatur ϑ zu berechnen. Zum Ermitteln der Fluid-Temperatur ϑ kann das Meßsystem ferner beispielsweise ein Temperatur-Meßgerät aufweisen, das dafür eingerichtet ist, die Fluid-Temperatur des Fluids meßtechnisch zu erfassen und wiederkehrend in einen Temperatur-Meßwert X_{ϑ}, nämlich einen die Fluid-Temperatur repräsentierenden Meßwert zu wandeln. Das Temperatur-Meßgerät kann beispielsweise an der Fluid-Zuführleitung 60 oder - wie auch in Fig. 1 schematisch dargestellt - beispielsweise am Vorratsbehälter 100 angeordnet sein. Falls erforderlich, etwa um eine räumliche Temperaturverteilung innerhalb des entlang des ersten bzw. zweiten Strömungspfad strömengelassenen Fluids bzw. innerhalb des Meßsystems noch exakter ermitteln zu können, kann das Meßsystem noch weitere, beispielsweise nämlich an der Fluid-Zuführleitung 60 und/oder Fluid-Rückführleitung 40 und/oder an der Fluid-Entnahmeleitung 50 angeordnete, Temperatur-Meßgeräte aufweisen. Alternativ oder in Ergänzung kann das Meßsystem ferner ein oder mehrere Druck-Meßgeräte umfassen, beispielsweise um einen Druckverlauf innerhalb des entlang des ersten Strömungspfad strömengelassenen Fluids und/oder innerhalb des entlang zweiten Strömungspfad strömengelassenen Fluids bzw. einen damit korrespondierenden thermischen Zustand des jeweiligen Fluids ermitteln zu können und/oder um basierend auf einem jeweils ermittelten Druckverlauf die Funktionstüchtigkeit des Meßsystems zu überwachen.

Zum Konditionieren der Wandlervorrichtung bzw. des damit gebildeten Meßsystems in der vorbeschriebenen Weise ist gemäß einer weiteren Ausgestaltung der Erfindung vorgesehen, die Fluid-Temperatur des durch den ersten bzw. des durch den zweiten Strömungspfad strömen gelassenen Fluids jeweils so einzustellen bzw. so zu wählen, daß durch den zweiten Strömungspfad (II) strömen gelassenes Fluid zumindest zeitweise eine Temperatur aufweist, die gleich bzw. zumindest näherungsweise gleich einer Temperatur des durch den ersten Strömungspfad (I) strömen gelassenen Fluids ist, beispielsweise also derart, daß das Fluid sowohl während des Strömens durch den ersten Strömungspfad (I) als auch während des Strömens durch den zweiten Strömungspfad (II), jeweils eine Temperatur von weniger als -40 °C aufweist, bzw. daß das Fluid sowohl während des Strömens durch den ersten Strömungspfad (I) als auch während des Strömens durch den zweiten Strömungspfad (II), jeweils eine Temperatur von mehr als 100 °C aufweist. Alternativ oder in Ergänzung kann das durch den ersten Strömungspfad strömen gelassene Fluid auch dazu dienen, von diesem kontaktierte (Innen-)Flächen der nämlichen ersten Strömungspfad bildenden Komponenten des Meßsystems wiederkehrend zu reinigen, insb. auch zu desinfizieren bzw. zu sterilisieren (CIP, SIP).

Um auf einfache gleichwohl effektive Weise sicherstellen zu können, daß das Fluid und/oder die Wandlervorrichtung 20 bzw. das damit gebildete Meßsystem in der vorbezeichneten Weise konditioniert ist, etwa derart, daß zumindest das entlang des zweiten Strömungspfad (II) geführte Fluid eine geforderte Spezifikation erfüllt und/oder daß die Wandlervorrichtung 20 zumindest während des Strömenlassens von Fluid entlang des zweiten Strömungspfades (II) mit einer für die Ermittlung der wenigstens einen Meßgröße geeigneten bzw. spezifizierten Betriebstemperatur betrieben ist, ist nach einer weiteren Ausgestaltung der Erfindung ferner vorgesehen, den zweiten Strömungspfads (II) erst einzurichten, nachdem eine vorgegebene Menge - beispielsweise entsprechend temperiertes, nämlich zumindest näherungsweise auf eine der Temperatur des hernach entlang des zweiten Strömungspfad strömen zu lassenden Fluids entsprechende Temperatur eingestelltes - Fluid entlang des, ggf. via Fluid-Rückführleitung 40 auch wieder zurück in den Vorratsbehälter 100 führenden ersten Strömungspfads (I) strömen gelassen ist bzw. nachdem nämliches Fluid für eine vorgegebene Zeitdauer entlang des ersten Strömungspfads strömen gelassen ist. Darüberhinaus ist es aber auch möglich, einen optimalen Zeitpunkt zum Einrichten des zweiten Strömungspfades bzw. zum Umstellen des Meßsystems vom ersten Strömungspfad auf den zweiten Strömungspfad durch eine, beispielsweise mittels der Meß- und Betriebselektronik 200 durchgeführtes, Vergleichen ausgewählter Meßwerte, beispielsweise nämlich für die momentane Betriebstemperatur, mit dafür vorgegebenen bzw. im Betrieb ermittelten, beispielsweise nämlich mit der momentanen Fluid-Temperatur korrespondierenden bzw. daraus abgeleiteten, Referenzwerten zu ermitteln bzw. in Abhängigkeit eines solchen Vergleichs entsprechende, nämlich das Einrichten des zweiten Strömungspfads (II) bzw. ein Unterbrechen des ersten Strömungspfads (I) veranlassende Steuerbefehle zu generieren. Nach einer weiteren Ausgestaltung der Erfindung ist ferner vorgesehen, im Betrieb des Meßsystems wenigstens einen der erwähnten, beispieklsweise nämlich mittels der Meß- und Betriebselektronik 200 generierten, Meßwerte für die Betriebstemperatur ϑ20 der Wandlervorrichtung 20 mit dem wenigstens einen - beispielsweise nämlich während des Strömenlassens von Fluid entlang des ersten Strömungspfads (I) ermittelten - Meßwert für die Fluidtemperatur ϑ zu vergleichen. Ferner ist vorgesehen, den zweiten Strömungspfad (II) erst dann einzurichten, wenn durch das Vergleichen des wenigstens einen der Meßwerte für die Betriebstemperatur der Wandlervorrichtung mit dem wenigstens einen Meßwert für die Fluidtemperatur ermittelt bzw. festgestellt ist, daß der erwähnte, zwischen der Betriebstemperatur ϑ20 der Wandlervorrichtung und der Fluidtemperatur ϑ existierender Temperaturunterschied Δϑ innerhalb eines dafür vorgegebenen, beispielsweise nämlich einen stationären thermischen Gleichgewichtzustand der Wandlervorrichtung 20 repräsentierenden, Toleranzbereichs liegt. Alternativ oder in Ergänzung können aber beispielsweise auch interessierende Stoffkenngrößen des im ersten Strömungspfad strömen gelassenen Fluids, wie z.B. dessen Dichte und/oder dessen Viskosität mittels der Meß- und Betriebselektronik 200, beispielsweise unter Verwendung des erwähnten Meßsignals s1 und/oder weiterer Meß- bzw. Hilfsmeßsignale (s2, θ1,..) ermittelt bzw. hernach entsprechend ausgewertet werden, um basieernd darauf den vorbezeichneten optimalen Zeitpunkt für das Einrichten des zweiten Strömungspfads zu ermitteln.

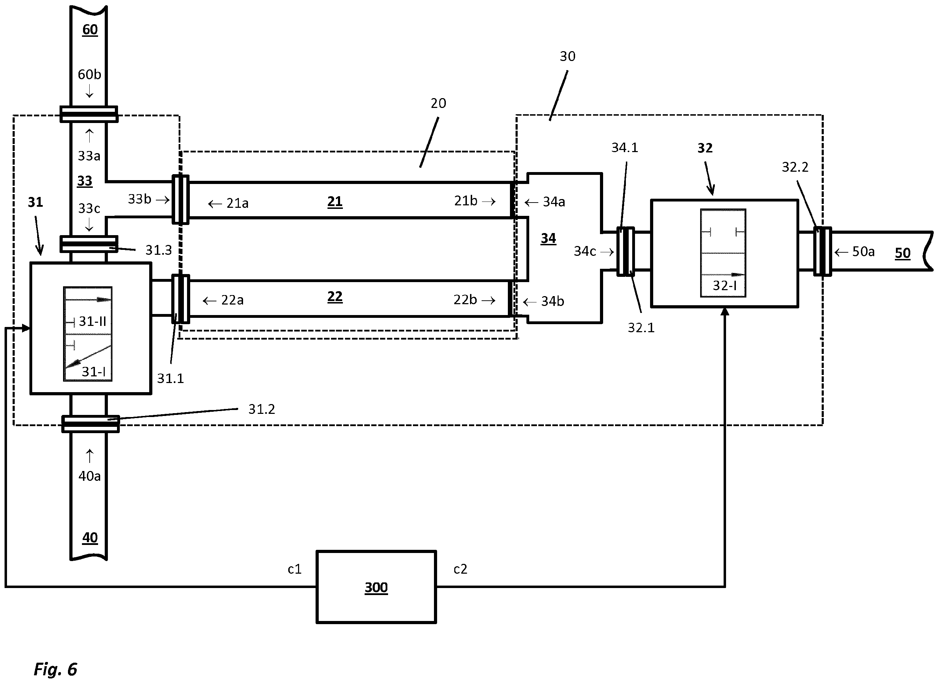

Zum Einrichten bzw. Unterbrechen der vorbezeichneten, nämlich sowohl das Lumen des ersten Rohrs 21 als auch das Lumen des zweiten Rohrs 22 involvierenden Strömungspfade (I; II) weist das Meßsystem nach einer weiteren Ausgestaltung der Erfindung ferner eine Stellvorrichtung 30 auf, die dafür ausgestaltet ist, den ersten Strömungspfad (I) einzurichten, und die zudem dafür ausgestaltet ist, den zweiten Strömungspfad (II) einzurichten. Die Stellvorrichtung 30 ist im hier gezeigten Ausführungsbeispiel sowohl an die Fluid-Zuführleitung 60 als auch die Fluid-Rückführleitung 40 sowie wie die Fluid-Entnahmeleitung 50 angeschlossen. Nach einer weiteren Ausgestaltung der Erfindung weist die Stellvorrichtung 30 eine Leitungsverzweigung 33 mit einem sowohl in eine erste Strömungsöffnung 33a als auch ein zweite Strömungsöffnung 33b sowie eine dritte Strömungsöffnung 33c mündenden Lumen auf. Nämliche Leitungsverzweigung 33 kann beispielsweise mittels eines T-Stücks gebildete bzw. so ausgestaltet sein, daß deren Lumen im wesentlichen T- oder Y-förmig ausgebildet ist. Bei dem in Fig. 6 gezeigten Ausführungsbeispiel ist die Leitungsverzweigung 33 an das zweite Leitungsende 60b der Fluid-Zuführleitung 60, beispielsweise mittels Flanschverbindung, angeschlossen, und zwar derart, daß das Lumen der Leitungsverzweigung 33 via erste Strömungsöffnung 33a mit dem Lumen der Fluid-Zuführleitung 60 kommuniziert. Ferner ist die Leitungsverzweigung 33 hier auch an das erste Rohrende 21a des ersten Rohrs 21, beispielsweise mittels Flanschverbindung, angeschlossen, derart das das Lumen der Leitungsverzweigung 33 via zweite Strömungsöffnung 33b mit dem Lumen des ersten Rohrs 21 kommuniziert. Unter Verwendung der in der vorbezeichneten Weise in das Meßsystem eingegliederten Leitungsverzweigung 33 kann das Einrichten des ersten Strömungspfades (I) erfolgen, indem u.a. die Strömungsöffnung 33c der Leitungsverzweigung 33, insb. druckdicht bzw. hermetisch, verschlossenen bzw. abgesperrt wird. Ferner kann das Einrichten des zweiten Strömungspfades (II) hierbei erfolgen, indem u.a. die Strömungsöffnung 33c der Leitungsverzweigung 33 entsprechend geöffnet bzw. freigegeben wird. Zum Anschließen der Leitungsverzeigung 33 an davon abgehende Rohre kann nämliche Leitungsverzweigung 33 - wie auch in Fig. 6 schematisch dargestellt - ferner entsprechende Anschlußflansche aufweisen, beispielsweise nämlich einen deren erste Strömungsöffnung 33a einfassenden Anschlußflansch und/oder einen deren zweite Strömungsöffnung 33b einfassenden Anschlußflansch und/oder einen deren dritte Strömungsöffnung 33c einfassenden Anschlußflansch.

Nach einer weiteren Ausgestaltung der Erfindung umfaßt die Stellvorrichtung 30 ferner eine Leitungsvereinigung 34 mit einem, beispielsweise von einer metallischen Wandung gefaßten und/oder kreiszylindrischen, Lumen, das sowohl in eine erste Strömungsöffnung 34a der Leitungsvereinigung 34 als auch in eine zweite Strömungsöffnung 34b der Leitungsvereinigung 34 sowie in eine - beispielsweise von einem Anschlußflansch 34.1 gefaßte - dritte Strömungsöffnung 34c der Leitungsvereinigung 34 mündet. Die Leitungsvereinigung 34 ist im besonderen sowohl an das zweite Rohrende 21b des ersten Rohrs als auch an das zweite Rohrende 22b des zweiten Rohrs, beispielsweise mittels Schweißverbindung oder mittels Lötverbindung, angeschlossen, und zwar derart, daß das Lumen der Leitungsvereinigung 34 via erste Strömungsöffnung 34a mit dem Lumen des ersten Rohrs 21 und via zweite Strömungsöffnung 34b mit dem Lumen des zweiten Rohrs 22 kommuniziert. Für den erwähnten Fall, daß mittels der Wandlervorrichtung 20 ein dem Generieren wenigstens eines mit der wenigstens einen Meßgröße korrespondierenden Meßsignals dienender Meßwandler, beispielsweise nämlich ein vibronischer oder ein magnetisch-induktiver Meßwandler, gebildet ist, kann beispielsweise auch die Leitungsvereinigung 34 - wie auch in Fig. 2a und 2b oder Fig. 3a und 3b jeweils angedeutet bzw. aus einer Zusammenschau der Fig. 2a, 2b, 6, 3a und 3b ohne weiteres ersichtlich - Bestandteil nämlichen Meßwandlers sein. Unter Verwendung der in der vorbezeichneten Weise in das Meßsystem eingegliederten Leitungsvereinigung 34 kann das Einrichten des ersten Strömungspfades (I) erfolgen, indem u.a. die dritte Strömungsöffnung 34c der Leitungsvereinigung 34, insb. druckdicht bzw. hermetisch, verschlossen bzw. abgesperrt wird bzw. kann das Einrichten des zweiten Strömungspfades erfolgen, indem u.a. nämliche Strömungsöffnung 34c wieder geöffnet bzw. freigegeben wird.

Nach einer weiteren Ausgestaltung der Erfindung umfaßt die Stellvorrichtung 30 weiters ein wenigstens zwei unterschiedliche Schaltstellungen aufweisendes erstes (fluidisches) Schaltelement 31, beispielsweise nämlich ein elektromotorisch oder elektromagnetisch betätigtes Ventil, ein 3-Wege-Hahn oder ein 3-Wege-Mischer, mit einem ersten Anschluß 31.1, einem zweiten Anschluß 31.2 und einem dritten Anschluß 31.3. Nämliches Schaltelement 31 ist im besonderen dafür eingerichtet, in einer ersten Schaltstellung einen vom ersten Anschluß 31.1, insb. nämlich lediglich, zum zweiten Anschluß 31.2 führenden ersten Strömungskanal 31-I bereitzustellen bzw. freizugeben. Darüberhinaus ist das Schaltelement 31 dafür eingerichtet, in einer von der ersten Schaltstellung verschiedenen zweiten Schaltstellung einen vom dritten Anschluß 31.3, insb. nämlich lediglich, zum ersten Anschluß 31.1 führenden zweiten Strömungskanal 31-II bereitzustellen bzw. freizugeben; dies im besonderen auch in der Weise, daß bei bereitgestelltem bzw. freigegebenen zweiten Strömungskanal 31-II zugleich auch der erste Strömungskanal 31-I abgesperrt ist. Das erste Schaltelement 31 kann dementsprechend auch mittels eines Zwei-Wegeventils, beispielsweise nämlich - wie auch in Fig. 6 gezeigt - mittels eines sogenannten 3/2-Wegeventils, gebildet sein.

Im besonderen ist das erste Schaltelement 31 ferner so ausgebildet und so innerhalb des Meßsystems eingegliedert, daß - wie auch in Fig. 6 gezeigt bzw. einer Zusammenschau der
Fig. 4, 5 und 6 ersichtlich - der erste Strömungskanal 31-I des Schaltelements 31 einen Teilabschnitt des ersten Strömungspfades (I) bildet bzw. daß der zweite Strömungskanal 31-II des Schaltelements 31 einen Teilabschnitt des zweiten Strömungspfades (II) bildet. Dafür ist das erste Schaltelement 31 nach einer weiteren Ausgestaltung der Erfindung an das erste Rohrende 22a des zweiten Rohrs 22 angeschlossen, beispielsweise nämlich mit dem ersten Anschluß 31.1 und/oder mittels Flanschverbindung; dies im besonderen in der Weise, daß der erste Strömungskanal 31-I des Schaltelements 31, sofern bereitgestellt bzw. freigegeben, mit dem Lumen des zweiten Rohrs 22 kommuniziert, und daß der zweite Strömungskanal 31-II des ersten Schaltelements 31, sofern bereitgestellt bzw. freigegeben, mit dem Lumen des zweiten Rohrs 22 kommuniziert.

Nach einer weiteren Ausgestaltung der Erfindung ist das erste Schaltelement 31 - wie auch in Fig. 6 schematisch dargestellt - ferner auch an das erste Rohrende 40a der Fluid-Rückführleitung 40 angeschlossen, beispielsweise nämlich mit dem zweiten Anschluß 31.2 bzw. mittels Flanschverbindung; dies im besonderen in der Weise, daß der erste Strömungskanal 31-I des ersten Schaltelements 31, sofern bereitgestellt bzw. freigegeben, mit dem Lumen der Fluid-Rückführleitung 40 kommuniziert, bzw. in der Weise, daß der erste Strömungskanal 31-I des ersten Schaltelements 31, sofern bereitgestellt bzw. freigegeben, sowohl mit dem Lumen der Fluid-Rückführleitung 40 als auch mit dem Lumen des zweiten Rohrs 22 kommuniziert. Unter Verwendung der oben erwähnten Leitungsverzweigung 33 kann das vorbezeichnete Eingliedern des ersten Schaltelements 31 in das Meßsystem - wie auch in Fig. 6 gezeigt bzw. einer Zusammenschau der Fig. 4, 5 und 6 ersichtlich - weiters z.B. dadurch realisiert bzw. vollzogen sein, indem das erste Schaltelement 31, z.B. mit dem dritten Anschluß 31.3, an nämliche Leitungsverzweigung 33, beispielsweise nämlich deren dritte Strömungsöffnung 33c, angeschlossen ist, derart, daß der zweite Strömungskanal 31-II des ersten Schaltelements 31, sofern bereitgestellt bzw. freigegeben, mit dem Lumen der Leitungsverzweigung 33 kommuniziert, bzw. derart, daß der zweite Strömungskanal 31-II des ersten Schaltelements 31, sofern bereitgestellt bzw. freigegeben, sowohl mit dem Lumen der Leitungsverzweigung 33 als auch mit dem Lumen des zweiten Rohrs 22 kommuniziert.

Nach einer weiteren Ausgestaltung der Erfindung umfaßt die Stellvorrichtung 30, insb. auch zwecks der Realisierung des ersten bzw. des zweiten Strömungspfades, ferner ein wenigstens zwei unterschiedliche Schaltstellungen aufweisendes zweites (fluidisches) Schaltelement 32 mit einem ersten Anschluß 32.1 und einem zweiten Anschluß 32.2. Das, beispielsweise mittels eines elektromotorisch oder elektromagnetisch betätigten Ventils gebildete, zweite Schaltelement 32 ist im besonderen dafür eingerichtet, in einer ersten Schaltstellung einen vom ersten Anschluß 32.1 zum zweiten Anschluß 32.2 führenden Strömungskanal 32-I bereitzustellen bzw. freizugeben. Im besonderen ist das zweite Schaltelement 32 ferner so ausgebildet und so innerhalb des Meßsystems eingegliedert, daß - wie auch in Fig. 6 gezeigt bzw. einer Zusammenschau der Fig. 4, 5 und 6 ersichtlich - nämlicher Strömungskanal 32-I des Schaltelements 32 einen Teilabschnitt des zweiten Strömungspfades (II) bildet. Darüberhinaus ist das Schaltelement 32 auch dafür eingerichtet, in einer von der ersten Schaltstellung verschiedenen zweiten Schaltstellung nämlichen Strömungskanal 32-I abzusperren; dies im besonderen in der Weise, daß nämlich kein Strömungskanal bereitgestellt bzw. freigeben ist. Das Schaltelement 32 kann demnach beispielsweise auch mittels eines Absperrventils gebildet sein. Für den vorbezeichneten Fall, daß in der Stellvorrichtung eine Leitungsvereinigung 34 vorgesehen ist, ist das zweite Schaltelement 32 nach einer weiteren Ausgestaltung der Erfindung an die Leitungsvereinigung 34 angeschlossen, beispielsweise nämlich mit dem ersten Anschluß 32.1 und/oder mittels Flanschverbindung; dies im besonderen in der Weise, daß der Strömungskanal 32-I nämlichen Schaltelements 32, sofern bereitgestellt bzw. freigegeben, via erste Strömungsöffnung 34a der Leitungsvereinigung 34 mit deren Lumen kommuniziert. Zum Anschließen des Schaltelements 32 an die Leitungsvereinigung 34 kann der Anschluß 32.1 des Schaltelements 32, wie auch in Fig. 6 angedeutet, beispielsweise als ein mit einem die dritte Strömungsöffnung 34c der Leitungsvereinigung 34 einfassenden Anschlußflansch 34.1 korrspondierender Anschlußflansch ausgebildet sein. Nach einer weiteren Ausgestaltung der Erfindung ist das zweite Schaltelement 32, beispielsweise mit dem zweiten Anschluß 32.2, an das erste Rohrende 40a der Fluid-Entnahmeleitung 50 angeschlossen ist, z.B. mittels einer Flanschverbindung; dies im besonderen in der Weise, daß der Strömungskanal 32-I des zweiten Schaltelements 32, sofern bereitgestellt bzw. freigegeben, mit dem Lumen der Fluid-Entnahmeleitung 50 kommuniziert, bzw. in der Weise, daß der Strömungskanal 32-I des zweiten Schaltelements 32, sofern bereitgestellt bzw. freigegeben, sowohl mit dem Lumen der vorbezeichneten Leitungsvereinigung 34 als auch mit dem Lumen der Fluid-Entnahmeleitung 50 kommuniziert.

Zum Ansteuern der Stellvorrichtung, insb. nämlich zum Generieren und Ausgeben von das Einstellen des ersten Strömungspfades (I) bzw. des zweiten Strömungspfades (II) bewirkende Steuerbefehle tragenden Steuersignalen c1, c2 umfaßt das Meßsystem nach eienr weiteren Ausgestaltung der Erfindung eine mit der Stelleinrichtung elektrisch gekoppelte, beispielsweise via Signalleitung an die Stelleinrichtung angeschlossene, Steuerelektronik 300. Die Steuerelektronik 300 kann - wie für derartige Elektroniken durchaus üblich - in vorteilhafter Weise in einem, insb. auch gegen Spritzwasser und/oder Staub dichten und/oder explosionsfesten und/oder mittels eines Schaltschranks gebildeten, eigenen Elektronik-Gehäuse 300', z.B. aus einem Metall und/oder einem Kunststoff, untergebracht sein; alternativ bzw. in Ergänzung können die Steuerelektronik 300 bzw. ausgewählte Komponenten davon gemeinsam mit der Meß- und Betriebselektronik 200 auch in dem erwähnten Elektronik-Schutzgehäuse 200' untergebracht sein. Zum Übertragen von von der erwähnten Meß- und Betriebselektronik 200 ermittelten Meßwerten X_{M,i} zur Steuerelektronik 300 und/oder zum Übertragen von von der Steuerelektronik 300 generierten Steuerbefehlen zu nämlicher Meß- und Betriebselektronik 200 umfaßt das Meßsystem nach einer weiteren Ausgestaltung der Erfindung ferner eine, z.B. mittels eines Datenkabels hergestellte und/oder auf Funkwellen basierende, Datenverbindung 500 bzw. sind die Meß- und Betriebselektronik 200 sowie die Steuerelektronik 300 dafür eingerichtet, miteinander zu kommunizieren, beispielsweise nämlich von der Meß- und Betriebselektronik 200 ermittelte Meßwerte zur Steuerelektronik 300 bzw. von der Steuerelektronik 300 generierte Steuerbefehle zur Meß- und Betriebselektronik 200 zu übertragen, beispielsweise via Feldbus, etwa gemäß IEC 61158, IEC 61784-1 bzw. IEC 61784-2, und/oder via Funkverbindung, etwa gemäß IEEE 802.11 oder IEEE 802.15.4.

## Patentansprüche

1. Meßsystem zum Messen wenigstens einer Meßgröße eines strömenden Fluids, welches Meßsystem umfaßt:
- eine Fluid-Zuführleitung (60) mit einem offenen ersten Leitungsende (60a), einem offenen zweiten Leitungsende (60b) sowie einem sich vom ersten Leitungsende bis zum zweiten Leitungsende erstreckenden Lumen;
- eine Wandlervorrichtung (20),
-- die ein erstes Rohr (21) mit einem offenen ersten Rohrende (21a), einem offenen zweiten Rohrende (21b) sowie einem sich vom ersten Rohrende bis zum zweiten Rohrende erstreckenden Lumen und ein zweites Rohr (22) mit einem offenen ersten Rohrende (22a), einem offenen zweiten Rohrende (22b) sowie einem sich vom ersten Rohrende (22a) bis zum zweiten Rohrende (22b) erstreckenden Lumen aufweist,
-- und die dafür eingerichtet ist, wenigstens ein mit der wenigstens einen Meßgröße korrespondierendes, nämlich wenigsten einen von nämlicher Meßgröße abhängigen Signalparameter aufweisendes bzw. auf eine Änderung der Meßgröße mit einer Änderung nämlichen Signalparameters reagierendes Meßsignal (s1) zu liefern;
- eine Fluid-Rückführleitung (40) mit einem offenen ersten Leitungsende (40a), einem offenen zweiten Leitungsende (40b) sowie einem sich vom ersten Leitungsende bis zum zweiten Leitungsende erstreckenden Lumen;
- eine Fluid-Entnahmeleitung (50) mit einem offenen ersten Leitungsende (50a), einem offenen zweiten Leitungsende (50b) sowie einem sich vom ersten Leitungsende bis zum zweiten Leitungsende erstreckenden Lumen;
- sowie eine Stellvorrichtung (30) zum Einrichten bzw. Unterbrechen von sowohl das Lumen des ersten Rohrs (21) als auch das Lumen des zweiten Rohrs (22) involvierenden Strömungspfaden (I; II),
-- wobei nämliche Stellvorrichtung (30) ausgestaltet ist, einen vom Lumen der Fluid-Zuführleitung (60) zum Lumen des ersten Rohrs (21) der Wandlervorrichtung, weiter zum Lumen des zweiten Rohrs (22) der Wandlervorrichtung und weiter zum Lumen der Fluid-Rückführleitung (40), gleichwohl nicht zum Lumen der Fluid-Entnahmeleitung (50) führenden ersten Strömungspfad (I) einzurichten ,
-- und wobei nämliche Stellvorrichtung (30) ausgestaltet ist, einen vom Lumen der Fluid-Zuführleitung (60) zum Lumen des ersten Rohrs (21) der Wandlervorrichtung und parallel zum Lumen des zweiten Rohrs (22) der Wandlervorrichtung und weiter vom Lumen des ersten Rohrs (21) bzw. vom Lumen des zweiten Rohrs (22) jeweils zum Lumen der Fluid-Entnahmeleitung (50) führenden zweiten Strömungspfad (II) einzurichten.

2. Meßsystem nach einem der vorherigen Ansprüche, wobei die Stellvorrichtung (30) umfaßt: eine Leitungsverzweigung (33) mit einem sowohl in eine erste Strömungsöffnung (33a) als auch ein zweite Strömungsöffnung (33b) sowie eine dritte Strömungsöffnung (33c) mündenden Lumen.

3. Meßsystem nach einem der vorherigen Ansprüche, wobei die Stellvorrichtung umfaßt: ein wenigstens zwei unterschiedliche Schaltstellungen aufweisendes erstes Schaltelement (31) mit einem ersten Anschluß (31.1), einem zweiten Anschluß (31.2) und einem dritten Anschluß (31.3), das dafür eingerichtet ist, in einer ersten Schaltstellung einen vom ersten Anschluß (31.1) zum zweiten Anschluß (31.2) führenden ersten Strömungskanal (31-I) bereitzustellen bzw. freizugeben, und das dafür eingerichtet ist, in einer zweiten Schaltstellung einen vom dritten Anschluß (31.3) zum ersten Anschluß (31.1) führenden zweiten Strömungskanal (31-II) bereitzustellen bzw. freizugeben.

4. Meßsystem nach einem der vorherigen Ansprüche, wobei die Stellvorrichtung umfaßt: ein wenigstens zwei unterschiedliche Schaltstellungen aufweisendes zweites Schaltelement (32) mit einem ersten Anschluß (32.1) und einem zweiten Anschluß (32.2), das dafür eingerichtet ist, in einer ersten Schaltstellung einen vom ersten Anschluß (32.1) zum zweiten Anschluß (32.2) führenden Strömungskanal (32-I) bereitzustellen bzw. freizugeben, und das dafür eingerichtet ist, in einer zweiten Schaltstellung nämlichen Strömungskanal (32-I) abzusperren.

5. Meßsystem nach einem der vorherigen Ansprüche, wobei die Stellvorrichtung (30) umfaßt: eine Leitungsvereinigung (34) mit einem sowohl in eine erste Strömungsöffnung (34a) der Leitungsvereinigung (34) als auch in eine zweite Strömungsöffnung (34b) der Leitungsvereinigung (34) sowie in eine dritte Strömungsöffnung (34c) der Leitungsvereinigung (34) mündenden Lumen.

6. Meßsystem nach dem vorherigen Anspruch,
- wobei die Leitungsvereinigung (34) sowohl an das zweite Rohrende (21b) des ersten Rohrs als auch an das zweite Rohrende (22b) des zweiten Rohrs angeschlossen ist, derart, daß das Lumen der Leitungsvereinigung (34) via erste Strömungsöffnung (34a) mit dem Lumen des ersten Rohrs (21) und via zweite Strömungsöffnung (34b) mit dem Lumen des zweiten Rohrs (22) kommuniziert; und/oder
- wobei die Leitungsvereinigung (34) einen deren dritte Strömungsöffnung (34c) einfassenden Anschlußflansch aufweist.

7. Meßsystem nach dem vorherigen Anspruch und Anspruch 5 oder 6, wobei auch die Leitungsvereinigung (34) Bestandteil nämlichen Meßwandlers ist.

8. Meßsystem nach einem der vorherigen Ansprüche,
- wobei die Wandlervorrichtung Bestandteil eines dem Generieren wenigstens eines mit der wenigstens einen Meßgröße korrespondierenden Meßsignals dienenden Meßwandlers, ist; und/oder
- wobei mittels der Wandlervorrichtung (20) ein dem Generieren wenigstens eines mit der wenigstens einen Meßgröße korrespondierenden Meßsignals dienender Meßwandler gebildet ist.

9. Meßsystem nach einem der vorherigen Ansprüche,
- weiters umfassend einen Vorratsbehälter (100) mit einem zumindest teilweise mit dem Fluid befüllten Lumen; und/oder
- weiters umfassend eine Förderpumpe (70), die dafür eingerichtet ist, Fluid entlang des ersten Strömungspfads (I) und/oder entlang des zweiten Strömungspfads (II) zu fördern; und/oder
- weiters umfassend wenigstens eine mit der Wandlervorrichtung elektrisch gekoppelte Meß- und Betriebselektronik, die dafür eingerichtet ist, das wenigstens eine Meßsignal (s1) zu verarbeiten; und/oder
- weiters umfassend: eine mit der Stellvorrichtung elektrisch gekoppelte Steuerelektronik, die dafür eingerichtet ist, die Stellvorrichtung ansteuernde Steuersignale (c1, c2) zu generieren bzw. auszugeben; und/oder
- weiters umfassend: wenigstens einen mit dem ersten Rohr thermisch gekoppelten Temperatursensor (25), der dafür eingerichtet ist, eine Temperatur nämlichen Rohrs zu erfassen und in ein diese repräsentierendes, nämlich wenigsten einen von nämlicher Temperatur abhängigen Signalparameter aufweisendes bzw. auf eine Änderung der Temperatur des ersten Rohrs mit einer Änderung nämlichen Signalparameters reagierendes Hilfsmeßsignal (θ1) zu wandeln ; und/oder
- weiters umfassend: einen stromabwärts der Fluid-Entnahmeleitung (50) angeordneten Entnahmebehälter (400).

10. Meßsystem nach einem der vorherigen Ansprüche,
- wobei zumindest das durch den zweiten Strömungspfad (II) strömen gelassene Fluid Methan und/oder Ethan und/oder Propan und/oder Buthan enthält; und/oder
- wobei zumindest das durch den zweiten Strömungspfad (II) strömen gelassene Fluid ein verflüssigtes Gases ist; und/oder.
- wobei das durch den zweiten Strömungspfad (II) strömen gelassene Fluid dem durch den ersten Strömungspfad (II) strömen gelassenen Fluid entspricht; und/oder
- wobei das durch den zweiten Strömungspfad (II) strömen gelassene Fluid eine Temperatur aufweist, die gleich einer Temperatur des durch den ersten Strömungspfad (I) strömen gelassenen Fluids ist; und/oder
- wobei das Fluid zumindest zeitweise eine Temperatur von weniger als -40 °C aufweist; und/oder
- wobei das Fluid zumindest zeitweise eine Temperatur von mehr als 100°C aufweist; und/oder
- wobei durch den zweiten Strömungspfad (II) strömen gelassenes Fluid zumindest zeitweise eine Temperatur aufweist, die gleich einer Temperatur des durch den ersten Strömungspfad (I) strömen gelassenen Fluids ist.

11. Verwenden eines Meßsystems gemäß einem der vorherigen Ansprüche zum Ermitteln von Meßwerten für wenigstens eine Meßgröße eines zu transferierenden Fluids.

12. Verfahren zum Betreiben eines dem Messen wenigstens einer Meßgröße eines strömenden Fluids dienenden Meßsystems gemäß einem der vorherigen Ansprüche, welches Verfahren umfaßt:
- Einrichten eines ersten Strömungspfades, der vom Lumen der Fluid-Zuführleitung (60) zum Lumen des ersten Rohrs, weiter zum Lumen des zweiten Rohrs und weiter zum Lumen der Fluid-Rückführleitung, gleichwohl nicht zum Lumen der Fluid-Entnahmeleitung führt;
- Strömenlassen von Fluid entlang des ersten Strömungspfads, derart, daß ein Teilvolumen des Fluids zunächst durch das Lumen des ersten Rohrs, weiter durch das Lumen des zweiten Rohrs und erst danach weiter zum Lumen der Fluid-Rückführleitung strömt;
- Einrichten eines zweiten Strömungspfades, der vom Lumen der Fluid-Zuführleitung (60) zum Lumen des ersten Rohrs und parallel zum Lumen des zweiten Rohrs und weiter vom Lumen des ersten Rohrs bzw. vom Lumen des zweiten Rohrs jeweils zum Lumen der Fluid-Entnahmeleitung führt;
- Strömenlassen von Fluid entlang des zweiten Strömungspfads, derart, daß ein Teilvolumen des Fluids durch das Lumen des ersten Rohrs weiter zum Lumen der Fluid-Entnahmeleitung und zeitgleich ein anderes Teilvolumen des Fluids durch das Lumen des zweiten Rohrs weiter zum Lumen der Fluid-Entnahmeleitung strömen;
- Generieren des wenigstens einen Meßsignals während des Strömenlassens von Fluid entlang des zweiten Strömungspfads;
- sowie Verwenden des wenigstens einen Meßsignals zum Ermitteln von Meßwerten für die wenigstens eine Meßgröße.

13. Verfahren nach dem vorherigen Anspruch,
- wobei das Strömenlassen von Fluid entlang des ersten Strömungspfads ein Strömenlassen eines Teilvolumens des Fluids vom ersten Rohrende des ersten Rohrs in Richtung von dessen zweiten Rohrende durch das Lumen des ersten Rohrs und ein Weiterströmenlassen nämlichen Teilvolumens des Fluids vom zweiten Rohrende des zweiten Rohrs in Richtung von dessen ersten Rohrende durch das Lumen des zweiten Rohrs (22) umfaßt; und/oder
- wobei das Strömenlassen von Fluid entlang des ersten Strömungspfads zum Temperieren der Wandlervorrichtung dient; und/oder
- wobei das Strömenlassen von Fluid entlang des ersten Strömungspfads zum zumindest teilweisen Reinigen des Meßsystems dient; und/oder
- wobei das Strömenlassen von Fluid entlang des ersten Strömungspfads zum Konditionieren des Fluids dient; und/oder
- wobei das Strömenlassen von Fluid entlang des zweiten Strömungspfads (II) ein Strömenlassen eines Teilvolumens des Fluids vom ersten Rohrende (21a) des ersten Rohrs (21) in Richtung von dessen zweiten Rohrende (21b) durch das Lumen des ersten Rohrs (21) sowie ein zeitgleiches Strömenlassen eines anderen Teilvolumens des Fluids vom ersten Rohrende (22a) des zweiten Rohrs (22) in Richtung von dessen zweiten Rohrende (22b) durch das Lumen des zweiten Rohrs (22) umfaßt; und/oder
- wobei das Einrichten des zweiten Strömungspfades ein Unterbrechen des ersten Strömungspfades umfaßt; und/oder
- wobei das Einrichten des ersten Strömungspfades ein Unterbrechen des zweiten Strömungspfades umfaßt; und/oder
- wobei der zweite Strömungspfad nicht zum Lumen der Fluid-Rückführleitung führt.

14. Verfahren nach einem der Ansprüche 12 bis 13, weiters umfassend:
- Generieren des wenigstens einen Meßsignals während des Strömenlassens von Fluid entlang des ersten Strömungspfads;
- sowie Verwenden des wenigstens einen Meßsignals zum Ermitteln des Signalparameters des wenigstens einen Meßsignals und/oder zum Ermitteln eines mit dem Signalparameter des wenigstens einen Meßsignals korrespondierenden (Skalen-) Nullpunkts des Meßsystems.

15. Verfahren nach einem der Ansprüche 12 bis 14, wobei das Meßsystem weiters eine Leitungsverzweigung (33) mit einem sowohl in eine erste Strömungsöffnung (33a) als auch ein zweite Strömungsöffnung (33b) sowie eine dritte Strömungsöffnung (33c) mündenden Lumen umfaßt.

16. Verfahren nach dem vorherigen Anspruch,
- wobei das Einrichten des ersten Strömungspfades (I) ein Verschließen bzw. ein Absperren der dritten Strömungsöffnung (33c) der Leitungsverzweigung (33) umfaßt; und/oder
- wobei das Einrichten des zweiten Strömungspfades (II) ein Öffnen bzw. ein Freigeben der dritten Strömungsöffnung (33c) der Leitungsverzweigung (33) umfaßt.

17. Verfahren nach dem vorherigen Anspruch,
- wobei die Leitungsverzweigung (33) an das zweite Leitungsende (60b) der Fluid-Zuführleitung angeschlossen ist, derart, daß das Lumen der Leitungsverzweigung (33) via erste Strömungsöffnung (33a) mit dem Lumen der Fluid-Zuführleitung kommuniziert; und/oder
- wobei die Leitungsverzweigung (33) an das erste Rohrende (21a) des ersten Rohrs (21) angeschlossen ist, derart das das Lumen der Leitungsverzweigung (33) via zweite Strömungsöffnung (33b) mit dem Lumen des ersten Rohrs (21) kommuniziert.

18. Verfahren nach einem der Ansprüche 12 bis 17, wobei das Meßsystem weiters eine Leitungsvereinigung (34) mit einem sowohl in eine erste Strömungsöffnung (34a) als auch ein zweite Strömungsöffnung (34b) sowie eine dritte Strömungsöffnung (34c) mündenden Lumen umfaßt.

19. Verfahren nach dem vorherigen Anspruch,
- wobei die Leitungsvereinigung (34) sowohl an das zweite Rohrende (21b) des ersten Rohrs als auch an das zweite Rohrende (22b) des zweiten Rohrs angeschlossen ist, derart, daß das Lumen der Leitungsvereinigung (34) via erste Strömungsöffnung (34a) mit dem Lumen des ersten Rohrs (21) und via zweite Strömungsöffnung (34b) mit dem Lumen des zweiten Rohrs (22) kommuniziert; und/oder
- wobei das Einrichten des ersten Strömungspfades (I) ein Verschließen bzw. ein Absperren der dritten Strömungsöffnung (34c) der Leitungsvereinigung (34) umfaßt; und/oder
- wobei das Einrichten des zweiten Strömungspfades (II) ein Öffnen bzw. ein Freigeben der dritten Strömungsöffnung (34c) der Leitungsvereinigung (34) umfaßt.

20. Verfahren nach einem der Ansprüche 12 bis 19, wobei das Meßsystem weiters umfaßt: ein Vorratsbehälter (100) mit einem zumindest teilweise mit dem Fluid befüllten Lumen.

21. Verfahren nach dem vorherigen Anspruch,
- wobei das Einrichten des ersten Strömungspfades (I) ein Verbinden des Lumens des Vorratsbehälters (100) mit dem Lumen der Fluid-Zuführleitung umfaßt, derart, daß der erste Strömungspfad (I) vom Lumen des Vorratsbehälters (100) weiter zum Lumen der Fluid-Zuführleitung führt; und/oder
- wobei das Einrichten des ersten Strömungspfades (I) ein Verbinden des Lumens der Fluid-Rückführleitung mit dem Lumen des Vorratsbehälters (100) umfaßt, derart, daß der erste Strömungspfad (I) vom Lumen der Fluid-Rückführleitung weiter zum Lumen des Vorratsbehälters (100) führt; und/oder
- wobei das Einrichten des zweiten Strömungspfades (II) ein Verbinden des Lumens des Vorratsbehälters (100) mit dem Lumen der Fluid-Zuführleitung umfaßt, derart, daß der zweite Strömungspfad (II) vom Lumen des Vorratsbehälters (100) weiter zum Lumen der Fluid-Zuführleitung führt.

22. Verfahren nach einem der Ansprüche 12 bis 21,
- wobei das Meßsystem weiters umfaßt: eine mit der Wandlervorrichtung elektrisch gekoppelte Meß- und Betriebselektronik; und/oder
- wobei das Meßsystem weiters umfaßt: einen stromabwärts der Fluid-Entnahmeleitung angeordneten Entnahmebehälter (400).

23. Verfahren nach einem der Ansprüche 12 bis 22, weiters umfassend:
- Ermitteln einer Betriebstemperatur der Wandlervorrichtung; und/oder
- Ermitteln einer Temperatur des Fluids; und/oder
- Ermitteln eines zwischen einer Betriebstemperatur der Wandlervorrichtung und einer Fluidtemperatur, nämlich einer Temperatur des Fluids existierenden Temperaturunterschieds; und/oder
- Ermitteln wenigstens eines Meßwerts für eine Fluidtemperatur, nämlich eine Temperatur des Fluids; und/oder
- Verwenden des wenigstens einen Meßsignals zum Ermitteln von Meßwerten für wenigstens eine weitere, nämlich von der wenigstens einen (ersten) Meßgröße verschiedende (zweite) Meßgröße; und/oder
- Verwenden des wenigstens einen Meßsignals und/oder zumindest einer Teilmenge der Meßwerte für die wenigstens eine Meßgröße zum Ermitteln von eine Menge des durch den zweiten Strömungspfad strömen gelassenen Fluids repräsentierenden Meßwerten.

24. Verfahren nach einem der Ansprüche 12 bis 23,
- wobei das Einrichten des zweiten Strömungspfads erfolgt, nachdem zwischen einer Betriebstemperatur der Wandlervorrichtung und der Fluidtemperatur, nämlich einer Temperatur des Fluids ein Temperaturunterschied ermittelt ist, der innerhalb eines dafür vorgegebenen Toleranzbereichs liegt; und/oder
- wobei das Einrichten des zweiten Strömungspfads erfolgt, nachdem eine vorgegebene Menge Fluid entlang des ersten Strömungspfads strömen gelassen ist und/oder nachdem Fluid für eine vorgegebene Zeitdauer entlang des ersten Strömungspfads strömen gelassen ist; und/oder
- wobei ein Schritt des Generierens des wenigstens einen Meßsignals Schritte des Bewirkens von mechanischen Schwingungen des ersten Rohrs und/oder des zweiten Rohrs sowie Schritte des Erfassens von Schwingungsbewegungen des ersten und/oder des zweiten Rohrs umfaßt.

25. Verfahren nach einem der Ansprüche 12 bis 24,
- wobei die Wandlervorrichtung dafür eingerichtet ist, wenigstens ein mit einer Betriebstemperatur der Wandlervorrichtung korrespondierendes, nämlich wenigsten einen von nämlicher Betriebstemperatur abhängigen Signalparameter aufweisendes bzw. auf eine Änderung der Betriebstemperatur mit einer Änderung nämlichen Signalparameters reagierendes Hilfsmeßsignal zu liefern; und/oder
- wobei die Wandlervorrichtung Bestandteil eines vibronischen Meßgeräts ist; und/oder
- wobei es sich bei der wenigstens einen Meßgröße um eine Massendurchflußrate des durch das Meßsystem strömengelassenen Fluids oder um eine davon abgeleitete Meßgröße handelt; und/oder
- wobei die Wandlervorrichtung weiters umfaßt: wenigstens einen Schwingungssensor (24) zum Erfassen von Schwingungsbewegungen des ersten Rohrs und/oder des zweiten Rohrs und zum Generieren eines als Meßsignal bzw. als Basis nämlichen Meßsignals dienenden Sensorsignals; und/oder
- wobei die Wandlervorrichtung weiters umfaßt: wenigstens einen Schwingungserreger (23) zum Anregen und Aufrechterhalten von mechanischen Schwingungen des ersten Rohrs und/oder des zweiten Rohrs ; und/oder
- wobei zumindest das durch den zweiten Strömungspfad (II) strömen gelassene Fluid Methan und/oder Ethan und/oder Propan und/oder Buthan enthält; und/oder
- wobei zumindest das durch den zweiten Strömungspfad (II) strömen gelassene Fluid ein verflüssigtes Gas ist; und/oder
- wobei das durch den zweiten Strömungspfad (II) strömen gelassene Fluid dem durch den ersten Strömungspfad (II) strömen gelassenen Fluid entspricht; und/oder
- wobei das durch den zweiten Strömungspfad (II) strömen gelassene Fluid eine Temperatur aufweist, die gleich einer Temperatur des durch den ersten Strömungspfad (I) strömen gelassenen Fluids ist; und/oder
- wobei das Fluid zumindest zeitweise eine Temperatur von weniger als -40 °C aufweist; und/oder
- wobei das Fluid zumindest zeitweise eine Temperatur von mehr als 100°C aufweist; und/oder
- wobei durch den zweiten Strömungspfad (II) strömen gelassenes Fluid zumindest zeitweise eine Temperatur aufweist, die gleich einer Temperatur des durch den ersten Strömungspfad (I) strömen gelassenen Fluids ist; und/oder
- wobei das Meßsystem eine Komponente einer Übergabestelle ist, die dafür eingerichtet ist, in einen stromabwärts der Fluid-Entnahmeleitung angeordneten Entnahmebehälter eine vorgegebenen bzw. vorgebbare Menge des Fluids zu transferieren.

## Claims

1. Measuring system designed to measure at least one measured variable of a flowing fluid, said measuring system comprising:
- a fluid supply pipe (60) with an open first pipe end (60a), an open second pipe end (60b), and an interior channel extending from the first pipe end to the second pipe end;
- a converter apparatus (20),
-- which comprises a first tube (21) with an open first tube end (21a), an open second tube end (21b), as well as an interior channel extending from the first tube end to the second tube end and a second tube (22) with an open first tube end (22a), an open second tube end (22b) and an interior channel extending from the first tube end (22a) to the second tube end (22b),
-- and which is configured to deliver at least one measuring signal (s1) corresponding to the at least one measured variable, namely having at least one signal parameter depending on said measured variable or reacting to a change in the measured variable with a change of said signal parameter;
- a fluid return pipe (40) with an open first pipe end (40a), an open second pipe end (40b), and an interior channel extending from the first pipe end to the second pipe end;
- a fluid tapping pipe (50) with an open first pipe end (50a), an open second pipe end (50b), and an interior channel extending from the first pipe end to the second pipe end;
- as well as an actuating unit (30) designed to establish or interrupt the flow paths (I, II) involving both the interior channel of the first tube (21) and the interior channel of the second tube (22);
-- wherein said actuating unit (30) is designed to establish a first flow path (I) running from the interior channel of the fluid supply line (60) to the interior channel of the first tube (21) of the converter apparatus, further to the interior channel of the second tube (22) of the converter apparatus, and further to the interior channel of the fluid return pipe (40), nevertheless not to the interior channel of the fluid tapping pipe (50),
-- and wherein said actuating unit (30) is designed to establish a second flow path (II) running from the interior channel of the fluid supply line (60) to the interior channel of the first tube (21) of the converter apparatus and parallel to the interior channel of the second tube (22) of the converter apparatus, and further from the interior channel of the first tube (21) or from the interior channel of the second tube (22) to the interior channel of the fluid tapping pipe (50).

2. Measuring system as claimed in one of the previous claims, wherein the actuating unit (30) comprises: a branch pipe (33) with an interior channel simultaneously entering into a first flow opening (33a), a second flow opening (33b), and a third flow opening (33c).

3. Measuring system as claimed in one of the previous claims, wherein the actuating unit comprises: a first switching element (31) having at least two different switching positions, said switching element having a first connection (31.1), a second connection (31.2) and a third connection (31.3), and which is designed to provide or release, in a first switch position, a first flow channel (31-1) running from the first connection (31.1) to the second connection (31.2), and which is designed to provide or release, in a second switch position, a second flow channel (31-11) running from the third connection (31.3) to the first connection (31.1).

4. Measuring system as claimed in one of the previous claims, wherein the actuating unit comprises: a second switching element (32) having at least two different switching positions, said switching element having a first connection (32.1) and a second connection (32.2), and which is designed to provide or release, in a first switch position, a first flow channel (32-I) running from the first connection (32.1) to the second connection (32.2), and which is designed to block, in a second switch position, said flow channel (32-I).

5. Measuring system as claimed in one of the previous claims, wherein the actuating unit comprises: a pipe combination (34) with an interior channel simultaneously entering into a first flow opening (34a) of the pipe combination (34), a second flow opening (34b) of the pipe combination (34), and a third flow opening (34c) of the pipe combination (34).

6. Measuring system as claimed in the previous claim,
- wherein the pipe combination (34) is connected to both the second tube end (21b) of the first tube and to the second end (22b) of the second tube in such a way that the interior channel of the pipe combination (34) communicates via the first flow opening (34a) with the interior channel of the first tube (21) and via the second flow opening (34b) with the interior channel of the second tube (22); and/or
- wherein the pipe combination (34) comprises a connecting flange encompassing the pipe combination's third flow opening (34c).

7. Measuring system as claimed in the previous claim and in Claim 5 or 6, wherein the pipe combination (34) is also an integral part of the transducer.

8. Measuring system as claimed in one of the previous claims,
- wherein the converter apparatus is an integral part of a transducer designed to generate at least a measuring signal corresponding to the at least one measured variable; and/or
- wherein a transducer which is designed to generate at least one measuring signal corresponding to the at least one measured variable is formed by means of the converter apparatus (20).

9. Measuring system as claimed in one of the previous claims,
- further comprising a supply tank (100) with an interior channel at least partially filled with the fluid; and/or
- further comprising a pump (70), which is designed to pump fluid along the first flow path (I) and/or along the second flow path (II); and/or
- further comprising at least a measuring and operating electronics unit, which is electrically coupled with the converter apparatus and which is designed to process the at least one measuring signal (s1); and/or
- further comprising: a control electronics unit electrically coupled to the actuating unit, said electronics unit being designed to generate or output control signals (c1, c2) controlling the actuating unit; and/or
- further comprising: at least a temperature sensor (25) thermally coupled to the first tube, said sensor being designed to measure a temperature of said tube and to convert it into an auxiliary measuring signal (θ1) representing said temperature, namely having at least a signal parameter depending on said temperature or reacting to a change in the temperature of the first tube with a change of said signal parameter; and/or
- further comprising: a tapping vessel (400) arranged downstream from the fluid tapping pipe (50).

10. Measuring system as claimed in one of the previous claims,
- wherein at least the fluid allowed to flow through the second flow path (II) contains methane and/or ethane and/or propane and/or butane; and/or
- wherein at least the fluid allowed to flow through the second flow path (II) is a liquefied gas; and/or
- wherein the fluid allowed to flow through the second flow path (II) corresponds to the fluid allowed to flow through the first flow path (I); and/or
- wherein the fluid allowed to flow through the second flow path (II) has a temperature, which is equal to a temperature of the fluid allowed to flow through the first flow path (I); and/or
- wherein the fluid at least temporarily has a temperature less than -40 °C; and/or
- wherein the fluid at least temporarily has a temperature greater than 100 °C; and/or
- wherein fluid flowing through the second flow path (II) at least temporarily has a temperature, which is equal to a temperature of the fluid allowed to flow through the first flow path (I).

11. Use of a measuring system as claimed in one of the previous claims to determine measured values for at least one measured variable of a fluid to be transferred.

12. Procedure for operating a measuring system as claimed in one of the previous claims, designed to measure at least one measured variable of a flowing fluid, said procedure comprising:
- Establishment of a first flow path, which runs from the interior channel of the fluid supply line (60) to the interior channel of the first tube, further to the interior channel of the second tube, and on to the interior channel of the fluid return pipe, nevertheless not to the interior channel of the fluid tapping pipe;
- Allowing fluid to flow along the first flow path in such a way that a partial volume of the fluid first circulates through the interior channel of the first tube, further through the interior channel of the second tube and only then further to the interior channel of the fluid return pipe;
- Establishment of a second flow path, which runs from the interior channel of the fluid supply line (60) to the interior channel of the first tube and parallel to the interior channel of the second tube, and further from the interior channel of the first tube or from the interior channel of the second tube to the interior channel of the fluid tapping pipe;
- Allowing fluid to flow along the second flow path in such a way that a partial volume of the fluid flows through the interior channel of the first tube, then to the interior channel of the fluid tapping pipe and, simultaneously, another partial volume of the fluid flows through the interior channel of the second tube to the interior channel of the fluid tapping pipe;
- Generation of at least a measuring signal while the fluid flows along the second flow path; and
- Use of the at least one measuring signal to determine measured values for the at least one measured variable.

13. Procedure as claimed in the previous claim,
- wherein allowing fluid to flow along the first flow path comprises allowing a partial volume of fluid to flow from the first tube end of the first tube in the direction of its second tube end through the interior channel of the first tube, and allowing said partial volume of fluid to continue to flow from the second tube end of the second tube in the direction of the first tube end through the interior channel of the second tube (22); and/or
- wherein allowing fluid to flow along the first flow path is used to regulate the temperature of the converter apparatus; and/or
- wherein allowing fluid to flow along the first flow path serves to at least partially clean the measuring system; and/or
- wherein allowing fluid to flow along the first flow path serves to condition the fluid; and/or
- wherein allowing fluid to flow along the second flow path (II) comprises allowing a partial volume of fluid to flow from the first tube end (21a) of the first tube (21) in the direction of its second tube end (21b) through the interior channel of the first tube (21), and simultaneously allowing another partial volume of fluid to flow from the first tube end (22a) of the second tube (22) in the direction of its second tube end (22b) through the interior channel of the second tube (22); and/or
- wherein the establishment of the second flow path comprises an interruption of the first flow path; and/or
- wherein the establishment of the first flow path comprises an interruption of the second flow path; and/or
- wherein the second flow path does not run to the interior channel of the fluid return pipe.

14. Procedure as claimed in one of the Claims 12 to 13, further comprising:
- Generation of the at least one measuring signal while fluid is allowed to flow along the first flow path; and
- Utilization of the at least one measuring signal to determine the signal parameter of the at least one measuring signal and/or to determine a (scale) zero point of the measuring system corresponding to the signal parameter of the at least one measuring signal.

15. Procedure as claimed in one of the Claims 12 to 14, wherein the measuring system further comprises a branch pipe (33) with an interior channel simultaneously entering into a first flow opening (33a), a second flow opening (33b), and a third flow opening (33c).

16. Procedure as claimed in the previous claim,
- wherein the establishment of the first flow path (I) comprises a sealing or locking of the third flow opening (33c) of the branch pipe (33); and/or
- wherein the establishment of the second flow path (II) comprises an opening or releasing of the third flow opening (33c) of the branch pipe (33).

17. Procedure as claimed in the previous claim,
- wherein the branch pipe (33) is connected to the second pipe end (60b) of the fluid supply line in such a way that the interior channel of the branch pipe (33) communicates via the first flow opening (33a) with the interior channel of the fluid supply line; and/or
- wherein the branch pipe (33) is connected to the first tube end (21a) of the first tube (21) in such a way that the interior channel of the branch pipe (33) communicates via the second flow opening (33b) with the interior channel of the first tube (21).

18. Procedure as claimed in one of the Claims 12 to 17, wherein the measuring system further comprises a pipe combination (34) with an interior channel simultaneously entering into a first flow opening (34a), a second flow opening (34b), and a third flow opening (34c).

19. Procedure as claimed in the previous claim,
- wherein the pipe combination (34) is simultaneously connected to the second tube end (21b) of the first tube and to the second tube end (22b) of the second tube, in such a way that the interior channel of the pipe combination (34) communicates via the first flow opening (34a) with the interior channel of the first tube (21) and via the second flow opening (34b) with the interior channel of the second tube (22); and/or
- wherein the establishment of the first flow path (I) comprises a sealing or blocking of the third flow opening (34c) of the pipe combination (34); and/or
- wherein the establishment of the second flow path (II) comprises an opening or releasing of the third flow opening (34c) of the pipe combination (34).

20. Procedure as claimed in one of the Claims 12 to 19, wherein the measuring system further comprises: a supply tank (100) with an interior channel at least partially filled with the fluid.

21. Procedure as claimed in the previous claim,
- wherein the establishment of the first flow path (I) comprises connecting the interior channel of the supply tank (100) to the interior channel of the fluid supply line in such a way that the first flow path (I) runs from the interior channel of the supply tank (100) to the interior channel of the fluid supply line; and/or
- wherein the establishment of the first flow path (I) comprises connecting the interior channel of the fluid return pipe to the interior channel of the supply tank (100) in such a way that the first flow path (I) runs from the interior channel of the fluid return pipe to the interior channel of the supply tank (100); and/or
- wherein the establishment of the second flow path (II) comprises connecting the interior channel of the supply tank (100) to the interior channel of the fluid supply line in such a way that the second flow path (II) runs from the interior channel of the supply tank (100) to the interior channel of the fluid supply line.

22. Procedure as claimed in one of the Claims 12 to 21,
- wherein the measuring system further comprises: a measuring and operating electronics unit electrically coupled with the converter apparatus; and/or
- wherein the measuring system further comprises: a tapping vessel (400) arranged downstream from the fluid tapping pipe.

23. Procedure as claimed in one of the Claims 12 to 22, further comprising:
- Determination of an operating temperature of the converter apparatus; and/or
- Determination of a temperature of the fluid; and/or
- Determination of a temperature difference existing between an operating temperature of the converter apparatus and a fluid temperature; and/or
- Determination of at least a measured value for a fluid temperature, namely a temperature of the fluid; and/or
- Utilization of the at least one measuring signal to determine measured values for at least an additional (second) measured variable, which is different from the at least one (first) measured variable; and/or
- Utilization of the at least one measuring signal and/or at least a partial quantity of the measured values for the at least one measured variable for the purpose of determining measured values representing a quantity of the fluid allowed to flow through the second flow path.

24. Procedure as claimed in one of the Claims 12 to 23,
- wherein the establishment of the second flow path occurs after the determination of a temperature difference between an operating temperature of the converter apparatus and a fluid temperature, namely a temperature of the fluid, said difference being within a tolerance range predefined for this purpose; and/or
- wherein the establishment of the second flow path occurs after a predefined volume of fluid has flowed along the first flow path and/or after fluid has flowed for a predefined time along the first flow path; and/or
- wherein a step associated with the generation of the at least one measuring signal comprises steps that cause mechanical vibrations of the first tube and/or of the second tube, and steps to detect vibration movements of the first and/or of the second tube.

25. Procedure as claimed in one of the Claims 12 to 24,
- wherein the converter apparatus is configured to deliver at least an auxiliary measuring signal corresponding to an operating temperature of the converter apparatus, namely having at least a signal parameter dependent on said operating temperature or reacting to a change in the operating temperature with a change of said signal parameter; and/or
- wherein the converter apparatus is an integral part of a vibronic measuring device; and/or
- wherein the at least one measured variable is a mass flow rate of the fluid flowing through the measuring system, or a measured variable derived from this;
and/or
- wherein the converter apparatus further comprises: at least a vibration sensor (24) designed to detect vibration movements of the first tube and/or of the second tube, and to generate a sensor signal serving as the measuring signal or the basis of said measuring signal; and/or
- wherein the converter apparatus further comprises: at least a vibration exciter (23) designed to excite and maintain mechanical vibrations of the first tube and/or of the second tube; and/or
- wherein at least the fluid allowed to flow through the second flow path (II) contains methane and/or ethane and/or of propane and/or of butane; and/or
- wherein at least the fluid allowed to flow through the second flow path (II) is a liquefied gas; and/or
- wherein the fluid allowed to flow through the second flow path (II) corresponds to the fluid allowed to flow through the first flow path (I); and/or
- wherein the fluid allowed to flow through the second flow path (II) has a temperature, which is equal to a temperature of the fluid flowing through the first flow path (I); and/or
- wherein the fluid at least temporarily has a temperature of less than -40 °C; and/or
- wherein the fluid at least temporarily has a temperature of more than 100 °C; and/or
- wherein the fluid allowed to flow through the second flow path (II) at least temporarily has a temperature, which is equal to a temperature of the fluid allowed to flow through the first flow path (I); and/or
- wherein the measuring system is a component of a transfer point, which is designed to transfer a volume of fluid, which is predefined or can be predefined, to a tapping vessel arranged downstream from the fluid tapping pipe.

## Revendications

1. Système de mesure destiné à la mesure d'une grandeur de mesure d'un fluide en écoulement, lequel système de mesure comprend :
- une conduite d'alimentation de fluide (60) avec une première extrémité de conduite ouverte (60a), une deuxième extrémité de conduite ouverte (60b), ainsi qu'un canal intérieur s'étendant de la première extrémité de conduite jusqu'à la deuxième extrémité de conduite ;
- un dispositif convertisseur (20),
-- qui comprend un premier tube (21) avec une première extrémité de tube ouverte (21a), une deuxième extrémité de tube ouverte (21b), ainsi qu'un canal intérieur s'étendant de la première extrémité de tube jusqu'à la deuxième extrémité de tube et un deuxième tube (22) avec une première extrémité de tube ouverte (22a), une deuxième extrémité de tube ouverte (22b), ainsi qu'un canal intérieur s'étendant de la première extrémité de tube (22a) jusqu'à la deuxième extrémité de tube (22b),
-- et qui est configuré de telle sorte à délivrer au moins un signal de mesure (s1) correspondant avec l'au moins une grandeur de mesure, notamment présentant au moins un paramètre de signal dépendant de ladite grandeur de mesure ou réagissant à un changement de la grandeur de mesure avec un changement dudit paramètre de signal ;
- une conduite de retour de fluide (40) avec une première extrémité de conduite ouverte (40a), une deuxième extrémité de conduite ouverte (40b), ainsi qu'un canal intérieur s'étendant de la première extrémité de conduite jusqu'à la deuxième extrémité de conduite ;
- une conduite de prélèvement de fluide (50) avec une première extrémité de conduite ouverte (50a), une deuxième extrémité de conduite ouverte (50b), ainsi qu'un canal intérieur s'étendant de la première extrémité de conduite jusqu'à la deuxième extrémité de conduite ;
- ainsi qu'un dispositif de réglage (30) destiné à la création ou à l'interruption de chemins d'écoulement (I, II) impliquant à la fois le canal intérieur du premier tube (21) et le canal intérieur du deuxième tube (22) ;
-- ledit dispositif de réglage (30) étant conçu de telle sorte à créer un premier chemin d'écoulement (I) menant du canal intérieur de la conduite d'alimentation de fluide (60) au canal intérieur du premier tube (21) du dispositif convertisseur, puis au canal intérieur du deuxième tube (22) du dispositif convertisseur, puis au canal intérieur de la conduite de retour de fluide (40), toutefois pas au canal intérieur de la conduite de prélèvement de fluide (50),
-- et ledit dispositif de réglage (30) étant conçu de telle sorte à créer un deuxième chemin d'écoulement (II) menant du canal intérieur de la conduite d'alimentation de fluide (60) au canal intérieur du premier tube (21) du dispositif et parallèlement au canal intérieur du deuxième tube (22) du dispositif convertisseur, puis au canal intérieur du premier tube (21) ou du canal intérieur du deuxième tube (22) respectivement au canal intérieur de la conduite de prélèvement de fluide (50).

2. Système de mesure selon l'une des revendications précédentes, pour lequel le dispositif de réglage (30) comprend : une dérivation de conduite (33) avec un canal intérieur débouchant à la fois dans une première ouverture d'écoulement (33a), une deuxième ouverture d'écoulement (33b), ainsi que dans une troisième ouverture d'écoulement (33c).

3. Système de mesure selon l'une des revendications précédentes, pour lequel le dispositif de réglage comprend : un premier élément de commutation (31) présentant au moins deux positions de commutation différentes, lequel élément de commutation comporte un premier raccord (31.1), un deuxième raccord (31.2) et un troisième raccord (31.3), et qui est conçu de telle sorte à mettre à disposition ou à débloquer, dans une première position de commutation, un premier canal d'écoulement (31-I) menant du premier raccord (31.1) au deuxième raccord (31.2), et qui est conçu de telle sorte à mettre à disposition ou à débloquer, dans une deuxième position de commutation, un deuxième canal d'écoulement (31-II) menant du troisième raccord (31.3) au premier raccord (31.1).

4. Système de mesure selon l'une des revendications précédentes, pour lequel le dispositif de réglage comprend : un deuxième élément de commutation (32) présentant au moins deux positions de commutation différentes, lequel élément de commutation comporte un premier raccord (32.1) et un deuxième raccord (32.2), et qui est conçu de telle sorte à mettre à disposition ou à débloquer, dans une première position de commutation, un premier canal d'écoulement (32-I) menant du premier raccord (32.1) au deuxième raccord (32.2), et qui est conçu de telle sorte à bloquer, dans une deuxième position de commutation, le dit canal d'écoulement (32-I).

5. Système de mesure selon l'une des revendications précédentes, pour lequel le dispositif de réglage comprend : une jonction de conduite (34) avec un canal intérieur débouchant à la fois dans une première ouverture d'écoulement (34a) de la jonction de conduite (34), une deuxième ouverture d'écoulement (34b) de la jonction de conduite (34), ainsi que dans une troisième ouverture d'écoulement (34c) de la jonction de conduite (34).

6. Système de mesure selon la revendication précédente,
- pour lequel la jonction de conduite (34) est raccordée à la fois à la deuxième extrémité de tube (21b) du premier tube et à la deuxième extrémité (22b) du deuxième tube, de telle sorte que le canal intérieur de la jonction de conduite (34) communique via la première ouverture d'écoulement (34a) avec le canal intérieur du premier tube (21) et via la deuxième ouverture d'écoulement (34b) avec le canal intérieur du deuxième tube (22) ; et/ou
- pour lequel la jonction de conduite (34) comprend une bride de raccordement englobant sa troisième ouverture d'écoulement (34c).

7. Système de mesure selon la revendication précédente et la revendication 5 ou 6, pour lequel la jonction de conduite (34) fait également partie intégrante du transducteur.

8. Système de mesure selon l'une des revendications précédentes,
- pour lequel le dispositif convertisseur fait partie intégrante d'un transducteur destiné à générer au moins un signal de mesure correspondant avec l'au moins une grandeur de mesure ; et/ou
- pour lequel est constitué, au moyen du dispositif convertisseur (20), un transducteur destiné à générer au moins un signal de mesure correspondant avec l'au moins une grandeur de mesure.

9. Système de mesure selon l'une des revendications précédentes,
- comprenant en outre un réservoir de stockage (100) avec un canal intérieur rempli au moins partiellement avec le fluide ; et/ou
- comprenant en outre une pompe de refoulement (70), laquelle est conçue de telle sorte à refouler le fluide le long du premier chemin d'écoulement (I) et/ou le long du deuxième chemin d'écoulement (II) ; et/ou
- comprenant en outre au moins une électronique de mesure et d'exploitation, laquelle est couplée électriquement avec le dispositif convertisseur et est conçue de telle sorte à traiter l'au moins un signal de mesure (s1) ; et/ou
- comprenant en outre : une électronique de commande couplée électriquement avec le dispositif de réglage, laquelle électronique est conçue de telle sorte à générer ou délivrer les signaux de commande (c1, c2) pilotant le dispositif de réglage ; et/ou
- comprenant en outre : au moins un capteur de température (25) couplé thermiquement avec le premier tube, lequel capteur est conçu de telle sorte à mesurer une température dudit tube et à le convertir en un signal de mesure auxiliaire (θ1) représentant cette température, notamment présentant au moins un paramètre de signal dépendant de ladite température ou réagissant à un changement de la température du premier tube avec un changement dudit paramètre de signal ; et/ou
- comprenant en outre : un réservoir de prélèvement (400) disposée en aval de la conduite de prélèvement de fluide (50).

10. Système de mesure selon l'une des revendications précédentes,
- pour lequel l'au moins un fluide s'écoulant à travers le deuxième chemin d'écoulement (II) contient du méthane et/ou de l'éthane et/ou du propane et/ou du butane ; et/ou
- pour lequel l'au moins un fluide s'écoulant à travers le deuxième chemin d'écoulement (II) est un gaz liquéfié ; et/ou
- pour lequel l'au moins un fluide s'écoulant à travers le deuxième chemin d'écoulement (II) correspond au fluide s'écoulant à travers le premier chemin d'écoulement (I) ; et/ou
- pour lequel l'au moins un fluide s'écoulant à travers le deuxième chemin d'écoulement (II) présente une température, qui est égale à une température du fluide s'écoulant à travers le premier chemin d'écoulement (I) ; et/ou
- pour lequel le fluide présente au moins temporairement une température inférieure à -40 °C ; et/ou
- pour lequel le fluide présente au moins temporairement une température supérieure à 100 °C ; et/ou
- pour lequel l'au moins un fluide s'écoulant à travers le deuxième chemin d'écoulement (II) présente au moins temporairement une température, qui est égale à une température du fluide s'écoulant à travers le premier chemin d'écoulement (I).

11. Utilisation d'un système de mesure selon l'une des revendications précédentes destinée à la détermination de valeurs mesurées pour au moins une grandeur de mesure d'un fluide à transférer.

12. Procédé destiné à l'exploitation d'un système de mesure selon l'une des revendications précédentes, destiné à la mesure d'au moins une grandeur de mesure d'un fluide en écoulement, lequel procédé comprend :
- Création d'un premier chemin d'écoulement, qui mène du canal intérieur de la conduite d'alimentation de fluide (60) au canal intérieur du premier tube, puis au canal intérieur du deuxième tube, puis au canal intérieur de la conduite de retour de fluide, toutefois pas au canal intérieur de la conduite de prélèvement de fluide ;
- Écoulement de fluide le long du premier chemin d'écoulement, de telle sorte qu'un volume partiel de fluide circule dans un premier temps à travers le canal intérieur du premier tube, puis à travers le canal intérieur du deuxième tube et seulement après jusqu'au canal intérieur de la conduite de retour de fluide ;
- Création d'un deuxième chemin d'écoulement, qui mène du canal intérieur de la conduite d'alimentation de fluide (60) au canal intérieur du premier tube et parallèlement au canal intérieur du deuxième tube, puis du canal intérieur du premier tube ou du canal intérieur du deuxième tube respectivement au canal intérieur de la conduite de prélèvement de fluide ;
- Écoulement de fluide le long du deuxième chemin d'écoulement, de telle sorte qu'un volume partiel de fluide circule à travers le canal intérieur du premier tube, puis à travers le canal intérieur de la conduite de prélèvement de fluide et, simultanément, un autre volume partiel de fluide à travers le canal intérieur du deuxième tube au canal intérieur de la conduite de prélèvement de fluide ;
- Génération de l'au moins un signal de mesure pendant l'écoulement de fluide le long du deuxième chemin d'écoulement ; ainsi que
- Utilisation de l'au moins un signal de mesure pour la détermination de valeurs mesurées pour l'au moins une grandeur de mesure.

13. Procédé selon la revendication précédente,
- pour lequel l'écoulement de fluide le long du premier chemin d'écoulement comprend un écoulement d'un volume partiel de fluide de la première extrémité de tube du premier tube en direction de sa deuxième extrémité de tube à travers le canal intérieur du premier tube, et un écoulement supplémentaire dudit volume partiel de fluide de la deuxième extrémité de tube du deuxième tube en direction de sa première extrémité de tube à travers le canal intérieur du deuxième tube (22) ; et/ou
- pour lequel l'écoulement de fluide le long du premier chemin d'écoulement est destiné à l'équilibrage en température du dispositif convertisseur ; et/ou
- pour lequel l'écoulement de fluide le long du premier chemin d'écoulement est destiné au moins au nettoyage partiel du système de mesure ; et/ou
- pour lequel l'écoulement de fluide le long du premier chemin d'écoulement est destiné au conditionnement du fluide ; et/ou
- pour lequel l'écoulement de fluide le long du deuxième chemin d'écoulement (II) comprend un écoulement d'un volume partiel de fluide de la première extrémité de tube (21a) du premier tube (21) en direction de sa deuxième extrémité de tube (21b) à travers le canal intérieur du premier tube (21), ainsi qu'un écoulement simultané d'un autre volume partiel de fluide de la première extrémité de tube (22a) du deuxième tube (22) en direction de sa deuxième extrémité de tube (22b) à travers le canal intérieur du deuxième tube (22) ; et/ou
- pour lequel la création du deuxième chemin d'écoulement comprend une interruption du premier chemin d'écoulement ; et/ou
- pour lequel la création du premier chemin d'écoulement comprend une interruption du deuxième chemin d'écoulement ; et/ou
- pour lequel le deuxième chemin d'écoulement ne mène pas au canal intérieur de la conduite de retour de fluide.

14. Procédé selon l'une des revendications 12 à 13, comprenant en outre :
- Génération de l'au moins un signal de mesure pendant l'écoulement de fluide le long du premier chemin d'écoulement ; ainsi que
- Utilisation de l'au moins un signal de mesure pour la détermination du paramètre de signal de l'au moins un signal de mesure et/ou pour la détermination d'un point zéro (de l'échelle) du système de mesure correspondant avec le paramètre de signal de l'au moins un signal de mesure.

15. Procédé selon l'une des revendications 12 à 14, pour lequel le système de mesure comprend en outre une dérivation de conduite (33) avec un canal intérieur débouchant à la fois dans une première ouverture d'écoulement (33a), une deuxième ouverture d'écoulement (33b), ainsi que dans une troisième ouverture d'écoulement (33c).

16. Procédé selon la revendication précédente,
- pour lequel la création du premier chemin d'écoulement (I) comprend une obturation ou un blocage de la troisième ouverture d'écoulement (33c) de la dérivation de conduite (33) ; et/ou
- pour lequel la création du deuxième chemin d'écoulement (II) comprend une ouverture ou un déblocage de la troisième ouverture d'écoulement (33c) de la dérivation de conduite (33).

17. Procédé selon la revendication précédente,
- pour lequel la dérivation de conduite (33) est raccordée à la deuxième extrémité de conduite (60b) de la conduite d'alimentation de fluide, de telle sorte que le canal intérieur de la dérivation de conduite (33) communique via la première ouverture d'écoulement (33a) avec le canal intérieur de la conduite d'alimentation de fluide ; et/ou
- pour lequel la dérivation de conduite (33) est raccordée à la première extrémité de tube (21a) du premier tube (21), de telle sorte que le canal intérieur de la dérivation de conduite (33) communique via la deuxième ouverture d'écoulement (33b) avec le canal intérieur du premier tube (21).

18. Procédé selon l'une des revendications 12 à 17, pour lequel le système de mesure comprend en outre une jonction de conduite (34) avec un canal intérieur débouchant à la fois dans une première ouverture d'écoulement (34a), une deuxième ouverture d'écoulement (34b), ainsi que dans une troisième ouverture d'écoulement (34c).

19. Procédé selon la revendication précédente,
- pour lequel la jonction de conduite (34) est raccordée à la fois à la deuxième extrémité de tube (21b) du premier tube et à la deuxième extrémité de tube (22b) du deuxième tube, de telle sorte que le canal intérieur de la jonction de conduite (34) communique via la première ouverture d'écoulement (34a) avec le canal intérieur du premier tube (21) et via la deuxième ouverture d'écoulement (34b) avec le canal intérieur du deuxième tube (22) ; et/ou
- pour lequel la création du premier chemin d'écoulement (I) comprend une obturation ou un blocage de la troisième ouverture d'écoulement (34c) de la jonction de conduite (34) ; et/ou
- pour lequel la création du deuxième chemin d'écoulement (II) comprend une ouverture ou un déblocage de la troisième ouverture d'écoulement (34c) de la jonction de conduite (34).

20. Procédé selon l'une des revendications 12 à 19, pour lequel le système de mesure comprend en outre : un réservoir de stockage (100) avec un canal intérieur rempli au moins partiellement avec le fluide.

21. Procédé selon la revendication précédente,
- pour lequel la création du premier chemin d'écoulement (I) comprend une liaison du canal intérieur du réservoir de stockage (100) avec le canal intérieur de la conduite d'alimentation de fluide, de telle sorte que le premier chemin d'écoulement (I) mène du canal intérieur du réservoir de stockage (100) au canal intérieur de la conduite d'alimentation de fluide ; et/ou
- pour lequel la création du premier chemin d'écoulement (I) comprend une liaison du canal intérieur de la conduite de retour de fluide avec le canal intérieur du réservoir de stockage (100), de telle sorte que le premier chemin d'écoulement (I) mène du canal intérieur de la conduite de retour de fluide au canal intérieur du réservoir de stockage (100) ; et/ou
- pour lequel la création du deuxième chemin d'écoulement (II) comprend une liaison du canal intérieur du réservoir de stockage (100) avec le canal intérieur de la conduite d'alimentation de fluide, de telle sorte que le deuxième chemin d'écoulement (II) mène du canal intérieur du réservoir de stockage (100) au canal intérieur de la conduite d'alimentation de fluide.

22. Procédé selon l'une des revendications 12 à 21,
- pour lequel le système de mesure comprend en outre : une électronique de mesure et d'exploitation couplée électriquement avec le dispositif convertisseur ; et/ou
- pour lequel le système de mesure comprend en outre : un réservoir de prélèvement (400) disposé en aval de la conduite de prélèvement de fluide.

23. Procédé selon l'une des revendications 12 à 22, comprenant en outre :
- Détermination d'une température de fonctionnement du dispositif convertisseur ; et/ou
- Détermination d'une température du fluide ; et/ou
- Détermination d'une différence de température existant entre une température de fonctionnement du dispositif convertisseur et une température du fluide ; et/ou
- Détermination d'au moins une valeur mesurée pour une température du fluide ; et/ou
- Utilisation de l'au moins un signal de mesure pour la détermination de valeurs mesurées pour au moins une (deuxième) grandeur de mesure supplémentaire, différente de l'au moins une (première) grandeur de mesure ; et/ou
- Utilisation de l'au moins un signal de mesure et/ou au moins d'une quantité partielle des valeurs mesurées pour l'au moins une grandeur de mesure en vue de la détermination de valeurs mesurées représentant une quantité de fluide s'écoulant à travers le deuxième chemin d'écoulement.

24. Procédé selon l'une des revendications 12 à 23,
- pour lequel la création du deuxième chemin d'écoulement intervient après la détermination d'une différence de température entre une température de fonctionnement du dispositif convertisseur et la température du fluide, laquelle différence se situe dans la plage de tolérance prédéfinie à cette fin ; et/ou
- pour lequel la création du deuxième chemin d'écoulement intervient après l'écoulement d'une quantité prédéfinie de fluide le long du premier chemin d'écoulement et/ou après écoulement de fluide pendant une durée prédéfinie le long du premier chemin d'écoulement ; et/ou
- pour lequel une étape de la génération de l'au moins un signal de mesure comprend des étapes de déclenchement de vibrations mécaniques du premier tube et/ou du deuxième tube, ainsi que des étapes de détection des mouvements de vibration du premier et/ou du deuxième tube.

25. Procédé selon l'une des revendications 12 à 24,
- pour lequel le dispositif convertisseur est configuré de telle sorte à délivrer au moins un signal de mesure auxiliaire correspondant avec une température de fonctionnement du dispositif convertisseur, notamment présentant au moins un paramètre de signal dépendant de ladite température de fonctionnement ou réagissant à un changement de la température de fonctionnement avec un changement dudit paramètre de signal ; et/ou
- pour lequel le dispositif convertisseur fait partie intégrante d'un appareil de mesure vibronique ; et/ou
- pour lequel il s'agit, concernant l'au moins une grandeur de mesure, d'un débit massique du fluide s'écoulant à travers le système de mesure, ou d'une grandeur de mesure dérivée de celui-ci ; et/ou
- pour lequel le dispositif convertisseur comprend en outre : au moins un capteur de vibration (24) destiné à détecter les mouvements de vibration du premier tube et/ou du deuxième tube, et à générer un signal de capteur servant de signal de mesure ou de base dudit signal de mesure ; et/ou
- pour lequel le dispositif convertisseur comprend en outre : au moins un excitateur de vibrations (23) destiné au déclenchement et au maintien de vibrations mécaniques du premier tube et/ou du deuxième tube ; et/ou
- pour lequel au moins le fluide s'écoulant à travers le deuxième chemin d'écoulement (II) contient du méthane et/ou de l'éthane et/ou du propane et/ou du butane ; et/ou
- pour lequel au moins le fluide s'écoulant à travers le deuxième chemin d'écoulement (II) est un gaz liquéfié ; et/ou
- pour lequel le fluide s'écoulant à travers le deuxième chemin d'écoulement (II) correspond au fluide s'écoulant à travers le premier chemin d'écoulement (I) ; et/ou
- pour lequel le fluide s'écoulant à travers le deuxième chemin d'écoulement (II) présente une température, qui est égale à une température du fluide s'écoulant à travers le premier chemin d'écoulement (I) ; et/ou
- pour lequel le fluide présente au moins temporairement une température inférieure à -40 °C ; et/ou
- pour lequel le fluide présente au moins temporairement une température supérieure à 100 °C ; et/ou
- pour lequel le fluide s'écoulant à travers le deuxième chemin d'écoulement (II) présente au moins temporairement une température, qui est égale à une température du fluide s'écoulant à travers le premier chemin d'écoulement (I) ; et/ou
- pour lequel le système de mesure est un composant de la station de transfert, qui est configurée de telle sorte à transférer une quantité prédéfinie ou prédéfinissable de fluide dans un réservoir de prélèvement disposé en aval de la conduite de prélèvement de fluide.
